# EUROPEAN PATENT SPECIFICATION

(11) **EP 2 033 248 B1**
(45) Date of publication and mention of the grant of the patent: **27.12.2017**
(21) Application number: 07718267.3
(22) Date of filing: 17.01.2007
(51) Int. Cl.: H01M 2/08, H01M 8/02, H01M 8/24

(54) **ELEKTRODE ASSEMBLY AND METHOD FOR FORMING A FUEL CELL**
ELEKTRODENANORDNUNG SOWIE VERFAHREN ZUR HERSTELLUNG EINER BRENNSTOFFZELLE
L'ASSEMBLAGE D'ELEKTRODE ET LA MÉTHODE POUR FORMER UN PILE À COMBUSTIBLE

(30) Priority: 17.01.2006 US 759380 P; 17.01.2006 US 759452 P; 17.01.2006 US 759456 P; 13.10.2006 US 549331
(43) Date of publication of application: 11.03.2009
(73) Proprietor: Henkel IP & Holding GmbH, 40589 Düsseldorf (DE)
(72) Inventor: BURDZY, Matthew, Peter, South Windsor, CT 06074 (US); EINSLA, Brian, Russel, Chalfont PA 18914 (US); WELSH, Kevin, James, Wallingford, CT 06492 (US); JACOBINE, Anthony, Francis, Meriden, CT 06450 (US); WOODS, John, G., Farmington, CT 06032 (US); NAKOS, Steven, Thomas, Andover, CT 06232 (US)
(74) Representative: Henkel IP Department
(86) International application number: PCT/US2007/001232
(87) International publication number: WO 2007/084561

(56) References cited:
- WO-A-99/04446
- WO-A-2004/107476
- WO-A-2005/074060
- WO-A-2005/078839
- WO-A2-02/093672
- KR-A- 20020 091 781
- KR-A- 20050 118 047
- US-A- 5 885 514
- US-A1- 2002 045 046
- US-A1- 2002 122 970
- US-A1- 2002 122 970
- US-B1- 6 451 468
- US-B2- 6 649 097
- US-B2- 6 649 097

## Description

### CROSS-REFERENCE TO RELATED APPLICATIONS

This application is a continuation-in-part of U.S. Patent Application No. 11/549,331, filed October 13, 2006, and claims the benefit of U.S. Provisional Application Nos. 60/759,380, filed January 17, 2006, 60/759,452, filed January 17, 2006 and 60/759,456, filed January 17, 2006, the contents of all of which are incorporated herein by reference.

### BACKGROUND OF THE INVENTION

### Field Of The Invention

The present invention relates to methods for forming a fuel cell and relates to membrane electrode assemblies having a cured sealant composition.

### BRIEF DESCRIPTION OF RELATED TECHNOLOGY

Although there are various known types of electrochemical cells, one common type is a fuel cell, such as a proton exchange membrane ("PEM") fuel cell, which is also referred to as a polymer electrolyte membrane fuel cell. The PEM fuel cell contains a membrane electrode assembly ("MEA") provided between two flow field or bipolar plates. Gaskets are used between the bipolar plates and the MEA to provide seals thereat. Additionally, since an individual PEM fuel cell typically provides relatively low voltage or power, multiple PEM fuel cells are stacked to increase the overall electrical output of the resulting fuel cell assembly. Sealing is also required between the individual PEM fuel cells. Moreover, cooling plates are also typically provided to control temperature within the fuel cell. Such plates are also sealed to prevent leakage within the fuel cell assembly. After assembling the fuel cell stack is clamped to secure the assembly.

As described in U.S. Patent No. 6,057,054, liquid silicone rubbers have been proposed for molding onto membrane electrode assemblies. Such silicone compositions, however, oftentimes may degrade before the desired operating lifetime of the fuel cell is achieved. Also such silicone rubbers release materials that contaminate the fuel cell, thereby adversely affecting the performance of the fuel cell. Molding of liquid silicone rubber onto separator plates is also described in U.S. Patent No. 5,264,299. To increase the operating lifetime thereof, more durable elastomers such as fluoroelastomers, as described in U.S. Patent No. 6,165,634, and polyolefin hydrocarbons, as described in U.S. Patent No. 6,159,628, have been proposed to bond the surface of fuel cell components. These compositions, however, do not impregnate well porous structures such as the gas diffusion layer. The viscosities of these thermoplastic and fluoroelastomers compositions are also too high for injection molding without damaging the substrate or impregnating the porous structure.

U.S. Patent Application Publication No. US 2005/0263246 A1 describes a method for making an edge-seal on a membrane electrode assembly that impregnates the gas diffusion layer using a thermoplastic film having melting point or a glass transition temperature of about 100°C. Such a method is problematic because the maximum temperature a proton exchange membrane can be exposed to will limit the melt processing temperature. The seal will then limit the upper operating temperature of the fuel cell. For example, proton exchange membranes can typically only be exposed to a maximum temperature of 130°C, while normally operating at a temperature of at least 90°C. Thus, the normal and maximum operating temperatures of fuel cells will be limited by the bonding methods of this disclosure.

U.S. Patent No. 6,884,537 describes the use of rubber gaskets with sealing beads for sealing fuel cell components. The gaskets are secured to the fuel cell components through the use of layers of adhesive to prevent movement or slippage of the gaskets. Similarly, International Patent Publication Nos. WO 2004/061338 A1 and WO 2004/079839 A2 describe the use of multi-piece and single-piece gaskets for sealing fuel cell components. The gaskets so described are secured to the fuel cell components through use of an adhesive. The placement of the adhesives and the gaskets are not only time consuming, but problematic because misalignment may cause leakage and loss of performance of the fuel cell.

U.S. Patent No. 6,875,534 describes a cured-in-place composition for sealing a periphery of a fuel cell separator plate. The cured-in-place composition includes a polyisobutylene polymer having a terminal allyl radial at each end, an organopolysiloxane, an organohydrogenpolysiloxane having at least two hydrogen atoms each attached to a silicon atom and a platinum catalyst. U.S. Patent No. 6,451,468 describes a formed-in-place composition for sealing a separator, an electrode or an ion exchange membrane of a fuel cell. The formed-in-place composition includes a linear polyisobutylene perfluoropolyether having a terminal alkenyl group at each ends, a cross-linker or hardener having at least two hydrogen atoms each bonded to a silicon atom, and a hydrosilylation catalyst. The cross-link density and the resulting properties of these compositions are limited by using linear polyisobutylene oligomers having an allyl or alkenyl functionality of two. Functionality in these compositions is modified by varying the hydrosilyl functionality, which limits the properties of the resultant compositions.

International Patent Publication No. WO 2004/047212 A2 describes the use of a foam rubber gasket, a liquid silicone sealant or a solid fluoroplastic for sealing fluid transport layer or a gas diffusion layer of a fuel cell. The use of solid gaskets, i.e., foam rubber and/or solid fluoroplastic tape or film, makes placement of these materials and subsequent alignment of the fuel cell components and gaskets time consuming and problematic.

U.S. Patent Application Publication No. US 2003/0054225 describes the use of rotary equipment, such as drums or rollers, for applying electrode material to fuel cell electrodes. While this publication describes an automated process for forming fuel cell electrodes, the publication fails to address the sealing concerns of the formed fuel cells.

European Patent Application No. EP 159 477 A1 describes a peroxide curable terpolymer of isobutylene, isoprene and para-methylstryene. Use of the composition in fuel cells is noted, but no application, processing, or device details are provided.

U.S. Patent No. 6,942,941 describes the use of a conductive adhesive to bond different sheets to form a bipolar separator plate. A conductive primer is first applied onto two plates and partially cured by heating to about 100°C. An adhesive is then applied between the two plates, and after pressing the plates together the adhesive is cured by heating to about 260°C.

WO 2005/074060 A1 discloses an electrochemical cell including a cured sealant composition adhesively bonded to the mating surface of components in the cell. The cured sealant composition includes reaction products of a polymerizable (meth)acrylate component and a boron-containing initiator.

WO 02/093672 A2 discloses a sealing process for forming complex, multiple seal configurations for fuel cells. To provide a seal - for oxidant, fuel or coolant chambers - a groove network is provided extending through the various elements of the fuel cell assembly. A sealing material - which preferably comprises a linear polysiloxane polymer with terminal or pendant unsaturated organic groups - is then connected to an external filling port and injected into the groove network; the sealing material is then cured to form the seal.

WO 2004/107476 A2 describes a method for forming a fuel cell comprising: (a) applying a curable composition, at a thickness which is compressible when cured, to a first fuel cell component comprising at least one fuel cell plate; (b) mating the first fuel cell component with a second fuel cell component comprising at least one fuel cell plate; (c) compressing the first and second fuel cell components with a compressive force so as to abuttingly engage the second fuel cell component and the curable composition; and, (c) curing said composition to form an adhesive bond between the first and second fuel cell components.

U.S. Patent No. 6,649,097 describes a gasket for layer-built fuel cells, the gasket being formed in one body at least on one of a surface of a sheet, the gasket being comprised of a vulcanizate of a composition comprising a liquid rubber selected from a group consisting of a liquid perfluoro rubber, liquid silicone rubber, a liquid nitrile rubber, a liquid ethylene-propylene-diene rubber and a liquid fluoro rubber.

U.S. Patent Application Publication No. US 2002/0122970 describes a method for fabricating a seal-integrated separator for a fuel cell, comprising the steps of: forming a through hole in the separator body; providing a first mold having grooves respectively positioned corresponding to the inner and outer seals disposed on one side of the separator body, a connecting cavity for forming a seal bridge at least partially connecting the inner and outer seals to each other at a position corresponding to the through hole, and at least one gate communicating with each of the grooves, and a second mold having grooves respectively positioned corresponding to the inner and outer seals disposed on the other side of the separator body, and a connecting cavity for forming a seal bridge at least partially connecting the inner and outer seals to each other at a position corresponding to the through hole; holding the separator body between the first mold and the second mold; and injecting melted seal material to form the seals into each of the grooves in the first mold by supplying the melted seal material into the gate and injecting a portion of the melted seal material into each of the grooves in the second mold via the through hole.

Despite the state of the art, there remains a need for a sealant composition suitable for use with electrochemical cell components either as a cured-in-place or as a formed-in-place gasket composition, and methods and systems for applying the sealant to fuel cell components.

### SUMMARY OF THE INVENTION

In a single cell arrangement, fluid-flow field plates are provided on each of the anode and cathode sides. The plates act as current collectors, provide support for the electrodes, provide access channels for the fuel and oxidant to the respective anode and cathode surfaces, and provide channels in some fuel cell designs for the removal of water formed during operation of the cell. In multiple cell arrangements, the components are stacked to provide a fuel cell assembly having a multiple of individual fuel cells. Two or more fuel cells can be connected together, generally in series but sometimes in parallel, to increase the overall power output of the assembly. In series arrangements, one side of a given plate serves as an anode plate for one cell and the other side of the plate can serve as the cathode plate for the adjacent cell. Such a series connected multiple fuel cell arrangement is referred to as a fuel cell stack, and is usually held together in its assembled state by tie rods and end plates. The stack typically includes manifolds and inlet ports for directing the fuel and the oxidant to the anode and cathode flow field channels.

The central element of the fuel cell is the MEA which includes two electrodes (anode, cathode) disposed between gas diffusion layers ("GDL's") and an ion-conducting polymer electrolyte. Each electrode layer includes electrochemical catalysts, such as platinum, palladium, ruthenium, and/or nickel. The GDL's are placed on top of the electrodes to facilitate gas transport to and from the electrode materials and conduct electrical current. When supplied with fuel (hydrogen) and oxidant (oxygen), two electrochemical half-cell reactions take place. Hydrogen fed to the anode is oxidized to produce protons and electrons in the presence of a catalyst. The resulting protons are transported in an aqueous environment across the electrolyte to the cathode. Useful electrical energy is harnessed by electrons moving through an external circuit before allowing them to reach the cathode. At the cathode, gaseous oxygen from the air is reduced and combined with the protons and electrons. The overall cell reaction yields one mole of water per mole of hydrogen and half mole of oxygen.

When the fuel cell is assembled, the membrane electrode assembly is compressed between separator plates, typically bipolar or monopolar plates. The plates incorporate flow channels for the reactant gases and may also contain conduits for heat transfer. Accordingly, the present invention provides a method to seal the hydrated reactant gases within the cell. The first step of this process includes compression molding a liquid sealant onto the edge of the membrane electrode assembly. Desirably, the nonconductive sealant penetrates the gas diffusion layers to prevent electrical shorting within the fuel cell. The result of the molding process provides a membrane electrode assembly with an edge seal, which can be easily handled. Once provided, the molded membrane electrode assembly can be placed in conjunction with the separator plates to provide a unit cell. A fuel cell stack typically consists of a plurality of unit cells.

According to an aspect of the present invention, a one-part, heat-curable hydrocarbon sealant may be used in a liquid injection molding process. The sealant has a pumpable viscosity in its uncured state to allow it to assume the shape of the mold. The sealant may include an allyl-terminated hydrocarbon, a reactive diluent, an organohydrogenpolysiloxane, an inhibitor and a catalyst. The reactive diluent may be monofunctional, difunctional, trifunctional, or multifunctional to effect the crosslink density of the cured seal. The appropriate amount of catalyst and inhibitor was chosen to cure the sealant at elevated temperature. Typical curing temperatures are within the range of 50°C to 200°C. The curing temperature is desirably chosen to fully cure the sealant in a timely fashion and so that it is compatible with the membrane. For instance, a typical perfluorosulfonic acid PEM cannot be heated above 130°C. In the molding process according to the present invention, the membrane along with electrodes and GDL's was placed into the mold of the injection molder and clamped closed. The one-part hydrocarbon sealant was injected into the heated mold, or die, at the appropriate temperature and cured to provide an edge seal to the MEA.

The hydrocarbon sealant material used in the present invention provides several advantages over other typical sealing and gasketing materials, such as silicones, ethylene propylene diene monomer ("EPDM") rubber and fluoroelastomers. Silicones are typically not stable for long times in the aggressive acidic and thermal conditions of a fuel cell, and do not provide the necessary sensitivity to organic contaminants. EPDM rubbers do not provide the necessary impregnation to the gas diffusion layers to prevent electrical shorting once assembled in the fuel cell. Fluoroelastomers are generally costly and need to be cured above the degradation temperature of the proton exchange membrane.

The molded MEA design of the present invention offers several advantages over other seal configurations. By injection molding the seal directly onto the five-layer MEA, an edge seal is provided to prevent reactant gases from leaking out of the MEA. The cured seal provides a method to hold the subsequent parts of the MEA (PEM, electrodes, GDL's) together. The sealant impregnates the GDL's during the injection molding process. This improves the adhesion of the seal to the MEA, and prevents the GDL's from touching, which would result in a short circuit. The one-step sealing process reduces the assembly time and number of seals in the fuel cell stack.

In one aspect of the present invention, a liquid injection molded sealant may be used to impregnate a gas diffusion layer of a membrane electrode assembly and polymerized to create a seal along the edge of the membrane electrode assembly so that the membrane electrode assembly can operate at temperatures above the application temperature of the sealant. The normal operating temperature of a PEM fuel cell is about 90°C. The upper temperature limit of a typical MEA is about 130°C. Accordingly, known thermoplastic sealants are ordinarily processed in the temperature range between 90°C and 130°C. The thermoplastic sealant should not melt below 90°C because otherwise it will flow when the fuel cell is operating. Further, the processing temperature of the thermoplastic cannot be increased above 130°C to get faster manufacturing times because the MEA will degrade. In one aspect of the present invention, the use of a thermoset sealant is advantageous. The thermoset sealant can flow into a mold and/or parts of the MEA, i.e., GDL's, at a low temperature and cure in the temperature range between 90°C and 130°C to provide a crosslinked material which is stable not only at the fuel cell operating temperature, but also stable at temperatures far above the normal operating temperature. Useful compositions may include functional hydrocarbon and functional fluoro-containing polymers.

In another aspect of the present invention, a curable hydrocarbon sealant is used in a liquid injection molding process. The sealant may include a functional hydrocarbon, a reactive diluent, an organohydrogenpolysiloxane, an inhibitor and a catalyst. The amount of catalyst and inhibitor is desirably chosen to cure the sealant at about 130°C or below within a short period of time, for example about fifteen minutes or less. In the molding process, the sealant may be injected directly onto the membrane electrode assembly via a mold or die at the appropriate temperature and cured to provide an edge seal to the membrane electrode assembly.

In another aspect of the present invention, a polymer composition is injected into a mold or die that is transparent or transmissive to a specific electromagnetic radiation, for example, ultraviolet light. The composition is injected and exposed to the electromagnetic radiation of a given wavelength through the die and polymerized to forming a seal.

In another aspect of the present invention, a b-staged composition may be melt impregnated into the membrane electrode assembly and polymerized to provide a functional seal.

In one aspect of the present invention, a method for forming a fuel cell includes providing a membrane electrode assembly including a gas diffusion layer; providing a mold having a cavity; positioning the mold so that the cavity is in fluid communication with the membrane electrode assembly; applying a curable liquid sealant composition into the cavity; and curing the composition. The sealant composition used in the present invention comprises an alkenyl terminated hydrocarbon oligomer; a polyfunctional alkenyl monomer selected from 1,9-decadiene, 1,2,4-trivinylcyclohexane and combinations thereof; a silyl hardener having at least about two silicon hydride functional groups; and a hydrosilylation catalyst. The step of applying the sealant may further include the step of applying pressure to the sealant so that the sealant penetrates the gas diffusion layer and/or applying the sealant so that edge of the membrane electrode assembly is fully covered with the sealant. The step of curing the composition may further include thermally curing the sealant at a temperature of about 130°C or less, desirably at a temperature of about 100°C or less, more desirably at a temperature of about 90°C or less, including at about room temperature. The curing step may include the step of providing actinic radiation to cure the sealant at about room temperature. Desirably, the curable sealant composition includes an actinic radiation curable material selected from (meth)acrylate, urethane, polyether, polyolefin, polyester, copolymers thereof and combinations thereof. Desirably, the alkenyl terminated hydrocarbon oligomer includes an alkenyl terminated polyisobutylene oligomer.

In another aspect of the present invention, a MEA having a cured sealant composition disposed over peripheral portions of the assembly is provided, where the cured sealant composition includes an alkenyl terminated diallyl polyisobutylene oligomer; a polyfunctional alkenyl monomer selected from 1,9-decadiene, 1,2,4-trivinylcyclohexane and combinations thereof; a silyl hardener having at least about two silicon hydride functional groups where only about one hydrogen atom is bonded to a silicon atom; a hydrosilylation catalyst; and a peroxide initiating or crosslinking agent.

In another aspect of the present invention, a MEA having a cured sealant composition disposed over peripheral portions of the assembly is provided, where the cured sealant composition may include an actinic radiation curable material selected from (meth)acrylate, urethane, polyether, polyolefin, polyester, copolymers thereof and combinations thereof.

In another aspect of the present invention, a method for forming a fuel cell may include providing a fuel cell component including a substrate; providing a mold having a cavity; positioning the mold so that the cavity is in fluid communication with the substrate; applying a curable liquid sealant composition into the cavity, where the curable sealant composition includes a telechelic-functional polyisobutylene, a silyl crosslinker having at least about two silicon hydride functional groups, a platinum catalyst and a photoinitiator; and curing the composition with actinic radiation. The telechelic-functional polyisobutylene may include an alkenyl terminated diallyl PIB oligomer. The fuel cell component may be a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

In another aspect of the present invention, a method for forming a fuel cell may include providing a fuel cell component including a substrate; providing a mold having a cavity; positioning the mold so that the cavity is in fluid communication with the substrate; applying a curable liquid sealant composition into the cavity, where the curable sealant composition comprises an alkenyl terminated hydrocarbon oligomer; a polyfunctional alkenyl monomer selected from 1,9-decadiene, 1,2,4-trivinylcyclohexane and combinations thereof; a silyl hardener having at least about two silicon hydride functional groups; and a hydrosilylation catalyst and includes actinic radiation curable material selected from (meth)acrylate, urethane, polyether, polyolefin, polyester, copolymers thereof and combinations thereof; and curing the composition with actinic radiation. The curable composition may include a telechelic-functional PIB, such as an alkenyl terminated diallyl PIB oligomer. The fuel cell component may be a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

The present invention is related to a method for improving pot life in an addition curable polyisobutylene-containing composition. The method includes the addition of TVCH into the composition. Desirably, from about 0.1 to about 40 weight percent of TVCH, more desirably from about 1 to about 20 weight percent of TVCH, is added on a total composition basis. Desirably, the method further includes the step of adding a hydrosilylation catalyst to at least about 15 molar-parts-per-million (mppm) on a total composition basis.

The composition used in the present invention may include an alkenyl terminated polyisobutylene oligomer; a polyfunctional alkenyl monomer; a silyl hardener having at least about two silicon hydride functional groups; and a hydrosilylation catalyst. Desirably, the alkenyl terminated polyisobutylene oligomer is a diallyl polyisobutylene oligomer. Desirably, only about one hydrogen atom is attached to any silicon atom in the silyl hardener. Desirably, the composition has a silicon-hydride to alkenyl molar ratio of at least about 1.2:1 or greater. The polyfunctional alkenyl monomer is selected from 1,9-decadiene, TVCH and combinations thereof. Desirably, the silyl hardener includes a bicyclic compound which is a reaction product of 1,9-decadiene and 2,4,6,8-tetramethylcyclotetrasiloxane.

These and other objectives, aspects, features and advantages of this invention will become apparent from the following detailed description of illustrative embodiments thereof, which is to be read in connection with the accompanying drawings in which like reference characters refer to the same parts or elements throughout the different views. The drawings are not necessarily to scale, emphasis instead being placed upon illustrating the principles of the invention.

### BRIEF DESCRIPTION OF THE DRAWINGS

FIG. 1 is a cross-sectional view of a fuel cell having an anode flow field plate, a gas diffusion layer, an anode catalyst, a proton exchange membrane, a cathode catalyst, a second gas diffusion layer, and a cathode flow field plate.
FIG. 2 is a cross-sectional of a fuel cell having a sealant disposed between a cathode flow field plate and an anode flow field plate, between the anode flow field plate and a gas diffusion layer, between a gas diffusion layer and a second cathode flow field plate, and between the second cathode flow field plate and a second anode flow field plate.
FIG. 3 is a cross-sectional of a fuel cell having a sealant disposed between a cathode flow field plate and an anode flow field plate, between the anode flow field plate and an anode catalyst, between a cathode catalyst and a second cathode flow field plate, and between the second cathode flow field plate and a second anode flow field plate.
FIG. 4 is a cross-sectional of a fuel cell having a sealant disposed between a cathode flow field plate and an anode flow field plate, between the anode flow field plate and a proton exchange membrane, between the proton exchange membrane and a second cathode flow field plate, and between the second cathode flow field plate and a second anode flow field plate.
FIG. 5 is a cross-sectional of a fuel cell having a sealant disposed between a cathode flow field plate and an anode flow field plate, between the anode flow field plate and a membrane electrode assembly, between the membrane electrode assembly and a second cathode flow field plate, and between the second cathode flow field plate and a second anode flow field plate.
FIG. 6 is a partial cross-sectional view of adjacent fuel cell components having opposed mating surfaces with a cured-in-place sealant composition disposed on one of the mating surfaces.
FIG. 7 is a partial cross-sectional view of adjacent fuel cell components of FIG. 6 having the cured-in-place sealant composition sealing both of the mating surfaces.
FIG. 8 is a partial cross-sectional view of adjacent fuel cell components having opposed mating surfaces with a cured-in-place sealant composition in the form of a bead disposed on one of the mating surfaces.
FIG. 9 is a partial cross-sectional view of adjacent fuel cell components having opposed mating surfaces with a formed-in-place sealant composition sealing both of the mating surfaces.
FIG. 10 is a graphical depiction of viscosity effects for varying amounts of TVCH in a 10,000 Mn alkenyl functional polyisobutylene composition.
FIG. 11 is a graphical depiction of viscosity effects for varying amounts of TVCH in a 20,000 Mn alkenyl functional polyisobutylene composition.
FIG. 12 is a graphical depiction of catalyst concentration effects on peak exotherm temperatures.
FIG. 13 is a graphical depiction of compression set data at different ratios of Si-H to alkenyl groups.
FIG. 14 is a graphical depiction of heat of reaction data for compositions with and without TVCH.
FIG. 15 is a graphical depiction of bimodal differential scanning calorimeter ("DSC") data with a 180°C upper temperature at a 1:1 stoichiometric ratio.
FIG. 16 is a graphical depiction of bimodal DSC data with an asymmetric curve with an upper temperature limit below 140°C at 1.5:1 stoichiometric ratio.

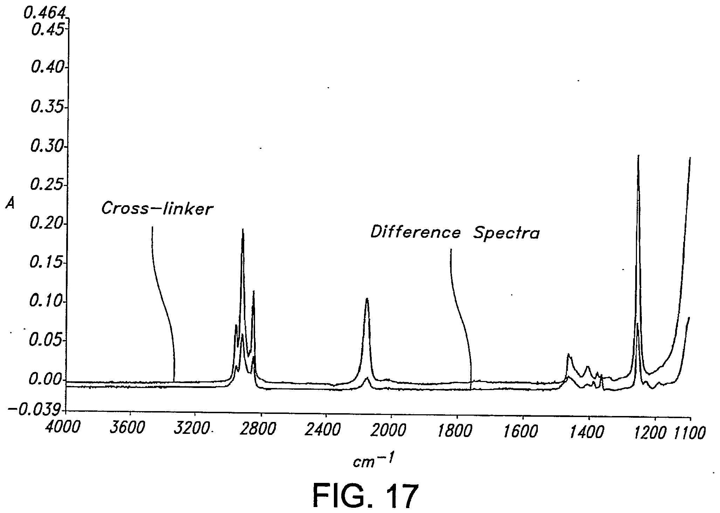

FIG. 17 is a graphical depiction of FTIR-ATR data confirming the presence of Si-H in the network with excess Si-H.
FIG. 18 is a cross-sectional view of a fuel cell having an anode flow field plate, a resin plate, a gas diffusion layer, an anode catalyst, a proton exchange membrane, a cathode catalyst, a second gas diffusion layer, a second resin plate and a cathode flow field plate.
FIG. 19 is a cross-sectional view of a membrane electrode assembly of the fuel cell of FIG. 18 having a sealant disposed at a peripheral portion of the assembly.
FIG. 20 is a cross-sectional view of a membrane electrode assembly of the fuel cell of FIG. 18 having a sealant disposed at a peripheral portion and over the peripheral edge portion of the assembly.
FIG. 21 is a cross-sectional view of a fuel cell having a sealant disposed between the membrane electrode assembly and the flow field plates of the fuel cell of FIG. 18 to form a stacked fuel cell assembly.
FIG. 22 is a perspective view of a mold having a top and a bottom mold member for forming a gasket in accordance with the present invention.
FIG. 23 is a cross-sectional view of the mold of FIG. 22 taken along the 23-23 axis.
FIG. 24 is an exploded view of the mold of FIG. 23 depicting the top mold member and the bottom mold member.
FIG. 25 is a bottom view of the top mold member of FIG. 24 taken along the 25-25 axis.
FIG. 26 is a left elevational view of the top mold member of FIG. 25 taken along the 26-26 axis.
FIG. 27 is a right elevational view of the top mold member of FIG. 25 taken along the 27-27 axis.
FIG. 28 a cross-sectional view of the top mold member of FIG. 25 taken along the 28-28 axis.
FIG. 29 is a perspective view of an alternative molds according to the present invention.
FIGs. 30A and 30B are cross-sectional views of the mold of FIG. 29 taken along the 30-30 axis showing a fuel cell component disposed within the mold.
FIG. 31 is a perspective view of the top mold member of FIGS. 22 or 29 depicting the top mold member having transparent material.
FIG. 32 is a cross-sectional view of the transparent top mold member of FIG. 31 taken along the 32-32 axis.
FIG. 33 is a cross-sectional view of an assembled separator plate and resin frame assembly according to the present invention.
FIG. 34 is an exploded, cross-sectional view of a separator plate and resin frame assembly of FIG. 33.
FIG. 35 is a schematic of an assembly for forming bonded fuel cell components of the present invention.

### DETAILED DESCRIPTION OF THE INVENTION

The present invention is directed to methods for forming a fuel cell and is directed to membrane electrode assemblies having a cured sealant composition. As used herein, an electrochemical cell is a device which produces electricity from chemical sources, including but not limited to chemical reactions and chemical combustion. Useful electrochemical cells include fuel cells, dry cells, wet cells and the like. A fuel cell, which is described in greater detail below, uses combustion of chemicals reactants to produce electricity. A wet cell has a liquid electrolyte. A dry cell has an electrolyte absorbed in a porous medium or otherwise restrained from being flowable.

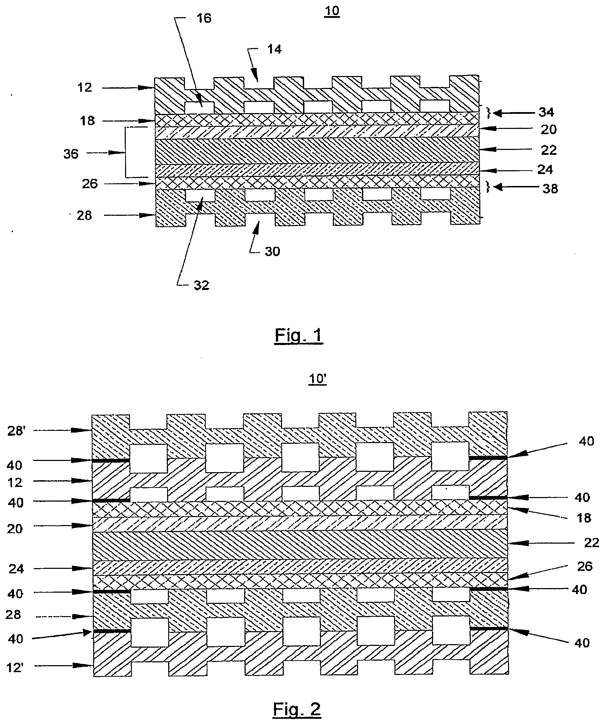

FIG. 1 shows a cross-sectional view of the basic elements of an electrochemical fuel cell, such as fuel cell **10.** Electrochemical fuel cells convert fuel and oxidant to electricity and reaction product. Fuel cell **10** consists of an anode flow field plate **12** with open face coolant channels **14** on one side and anode flow channels **16** on the second side, a gas diffusion layer **18,** an anode catalyst **20,** a proton exchange membrane **22,** a cathode catalyst **24,** a second gas diffusion layer **26,** and a cathode flow field plate **28** with open face coolant channels **30** on one side and cathode flow channels **32** on the second side, interrelated as shown in FIG. 1. The anode catalyst 20, the proton exchange membrane 22 and the cathode catalyst 24 combinations, and optionally the gas diffusion layers 18 and 26, are often referred to as a membrane electrode assembly 36. Gas diffusion layers 18 and 26 are typically formed of porous, electrically conductive sheet material, such as carbon fiber paper. The present invention is not, however, limited to the use of carbon fiber paper and other materials may suitably be used. Fuel cells are not, however, limited to such a depicted arrangement of components. The anode and cathode catalyst layers **20** and **24** are typically in the form of finely comminuted platinum. The anode **34** and cathode **36** are electrically coupled (not shown) to provide a path for conducting electrons between the electrodes to an external load (not shown). The flow field plates **12** and **28** are typically formed of graphite impregnated plastic; compressed and exfoliated graphite; porous graphite; stainless steel or other graphite composites. The plates may be treated to effect surface properties, such as surface wetting, or may be untreated. The present invention is not, however, limited to the use of such materials for use as the flow field plates and other materials may suitably be used. Moreover, the present invention is not limited to the fuel cell components and their arrangement depicted in FIG. 1. For example, in some fuel cells the flow field plates are made from a metal or metal containing material, typically, but not limited to, stainless steel. The flow field plates may be bipolar plates, i.e., a plate having flow channels on opposed plate surfaces, as depicted in FIG. 1. Alternatively, the bipolar plates may be made by securing mono-polar plates together.

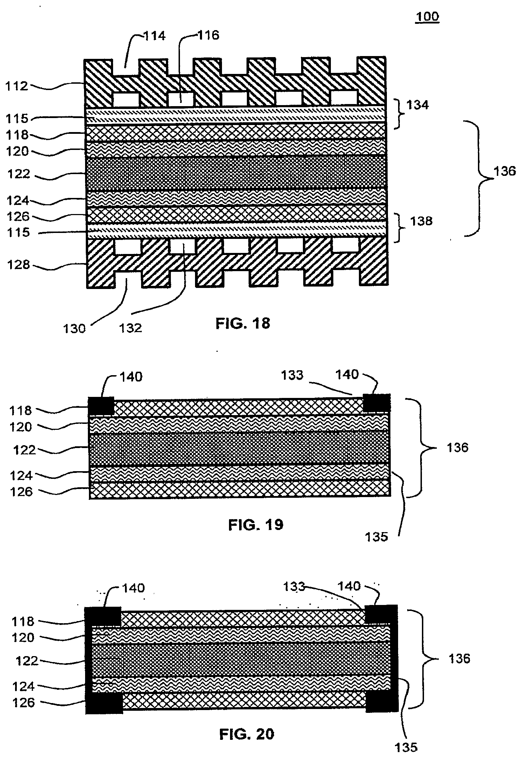

Moreover, as depicted in FIG. 18, some fuel cell designs utilize resin frames **115** between the membrane electrode assembly **136** and the separator plates **112, 128** to improve the durability of the membrane electrode assembly **136** and afford the correct spacing between the membrane electrode assembly **136** and separator plates **112, 128** during fuel cell assembly. In such a design, it is necessary have a seal between the separator plates **112, 128** and the resin frames **115.**

Further, the present invention is not limited to the fuel cell components and their arrangement depicted in FIG. 1. For example, a direct methanol fuel cell ("DMFC") can consist of the same components shown in FIG. 1 less the coolant channels. Further, the fuel cell **10** can be designed with internal or external manifolds (not shown).

While this invention has been described in terms of a PEM fuel cell, it should be appreciated that the invention is applicable to any type of fuel cell. The concepts in this invention can be applied to phosphoric acid fuel cells, alkaline fuel cells, higher temperature fuel cells such as solid oxide fuel cells and molten carbonate fuel cells, and other electrochemical devices.

At anode **34,** a fuel (not shown) traveling through the anode flow channels **16** permeates the gas diffusion layer **18** and reacts at the anode catalyst layer **20** to form hydrogen cations (protons), which migrate through the proton exchange membrane **22** to cathode **38.** The proton exchange membrane **22** facilitates the migration of hydrogen ions from the anode 34 to the cathode **38.** In addition to conducting hydrogen ions, the proton exchange membrane **22** isolates the hydrogencontaining fuel stream from the oxygen-containing oxidant stream.

At the cathode **38,** oxygen-containing gas, such as air or substantially pure oxygen, reacts with the cations or hydrogen ions that have crossed the proton exchange membrane **22** to form liquid water as the reaction product. The anode and cathode reactions in hydrogen/oxygen fuel cells are shown in the following equations:

Anode reaction: H₂ → 2 H⁺ + 2 e⁻ (I)

Cathode reaction: ½ O₂ + 2 H⁺ + 2 e⁻ → H₂O (II)

In a single cell arrangement, fluid-flow field plates are provided on each of the anode and cathode sides. The plates act as current collectors, provide support for the electrodes, provide access channels for the fuel and oxidant to the respective anode and cathode surfaces, and provide channels in some fuel cell designs for the removal of water formed during operation of the cell. In multiple cell arrangements, the components are stacked to provide a fuel cell assembly having a multiple individual fuel cells. Two or more fuel cells **10** can be connected together, generally in series but sometimes in parallel, to increase the overall power output of the assembly. In series arrangements, one side of a given plate serves as an anode plate for one cell and the other side of the plate can serve as the cathode plate for the adjacent cell. Such a series connected multiple fuel cell arrangement is referred to as a fuel cell stack (not shown), and is usually held together in its assembled state by tie rods and end plates. The stack typically includes manifolds and inlet ports for directing the fuel and the oxidant to the anode and cathode flow field channels.

FIG. 2 shows a cross-sectional view of the basic elements of fuel cell **10** in which certain of the adjacent elements have a cured or curable composition **40** therebetween to provide a fuel assembly **10'.** As depicted in FIG. 2, composition **40** seals and/or bonds the anode field plate **12** to the gas diffusion layer **18.** The cathode field plate **28** is also sealed and/or bonded to the gas diffusion layer **26.** In this embodiment, fuel cell assembly **10'** often has a preformed membrane electrode assembly **36** anode with the anode catalyst **20** and the cathode catalyst **24** disposed thereon. The composition **40** disposed between the various components of the fuel cell assembly **10'** may be the same composition or may be different compositions. Additionally, as depicted in FIG. 2, composition 40 may seal and/or bond the anode flow field plate 12 to a component of a second fuel cell, such as a second cathode flow plate 28'. Further, as depicted in FIG. 2, composition 40 may seal and/or bond the cathode flow field plate 28 to a component of a third fuel cell, such as a second anode flow plate 12'. In such a manner, the fuel cell assembly **10'** is formed of multiple fuel cells having components sealingly and/or adhesively adjoined to provide a multiple cell electrochemical device.

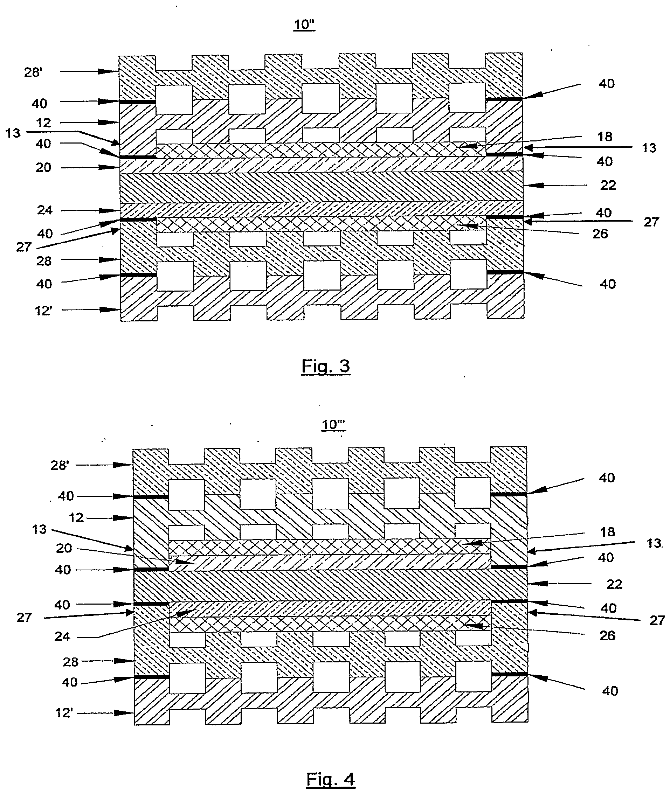

FIG. 3 shows a cross-sectional view of the basic elements of fuel assembly **10"** in which certain of the adjacent elements have a cured or curable composition **40,** which may be the same or different, therebetween. In this embodiment of the present invention, the gas diffusion layer **18** is disposed between elongated terminal walls **13** of the anode flow field plate **12,** and the gas diffusion layer **26** is disposed between elongated terminal walls **27** of the cathode flow field plate **28.** Composition **40** is used to seal and/or bond the anode flow field plate **12** to the anode catalyst **20** and to seal and/or bond the cathode flow field plate to the cathode catalyst **24.**

FIG. 4 shows a cross-sectional view of the basic elements of fuel assembly **10"**' in which certain of the adjacent elements have a cured or curable composition **40,** which may be the same or different, therebetween. In this embodiment of the present invention, the gas diffusion layer **18** and the anode catalyst **20** are disposed between the elongated terminal walls **13** of the anode flow field plate **12,** and the gas diffusion layer **26** and the cathode catalyst **24** are disposed between the elongated terminal walls **27** of the cathode flow field plate **28.** Composition **40** is used to seal and/or bond the anode flow field plate **12** to the proton exchange membrane **22** and to seal and/or bond the cathode flow field plate to the proton exchange membrane **22.**

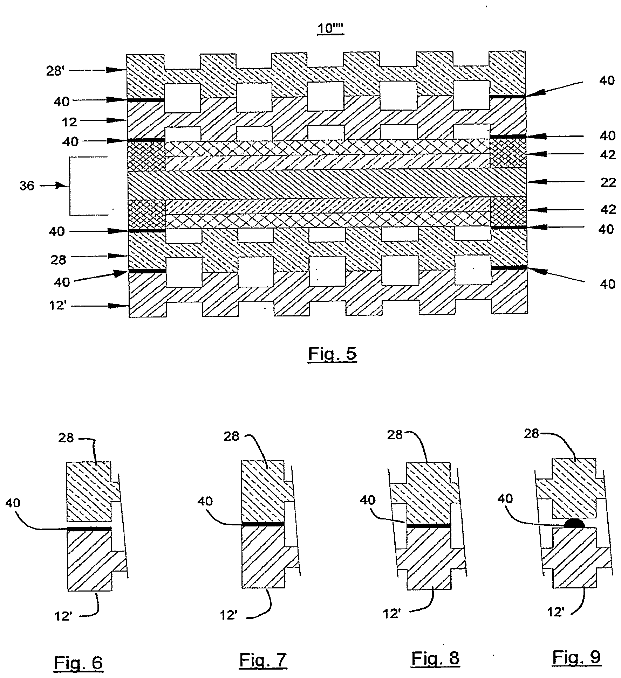

FIG. 5 shows a cross-sectional view of the basic elements of fuel assembly **10"**" in which certain of the adjacent elements have a cured or curable composition **40,** which may be the same or different, therebetween. In this embodiment of the present invention, the gas diffusion layer **18** and the anode catalyst **20** are disposed between a membrane electrode assembly frame **42** of the membrane electrode assembly **36,** and the gas diffusion layer **26** and the cathode catalyst **24** are disposed between a membrane electrode assembly frame **42** of the membrane electrode assembly **36.** Composition **40** is used to seal and/or bond the anode flow field plate **12** to the membrane electrode assembly frame **42** and to seal and/or bond the cathode flow field plate to the membrane electrode assembly frame **42.**

Composition **40** may be a cured-in-place or a formed-in-place composition thereby acting as a cured-in-place or a formed-in-place gasket. As used herein, the phrase "cured-in-place" and it variants refer to a composition applied to the surface of one component and cured thereat. Sealing is achieved through compression of the cured material during assembly of the one component with another component. The composition is typically applied in precise patterns by tracing, screen-printing or the like. Moreover, the composition may be applied as a film onto a substrate. Such application techniques are amenable to large scale or large volume production. As used herein, the phrase "formed-in-place" and its variants refer to a composition that is placed between two assembled components and is cured to both components. The use of the polymerizable composition as a formed-in-place and/or as a cured-in-place gasket allows for modular or unitized fuel assembly stack designs. Desirably, the composition is a compressible composition to facilitate sealing upon assembly of the fuel assembly stack designs.

In FIGs. 6-9 the adjacent fuel cell components are shown as the cathode flow field plate **28** and the anode flow field plate **12',** however, other adjacent fuel cell components may suitably be used with the present invention. As used herein the phrase "mating surface" and its variants refer to a surface of a substrate that is proximally alignable to another substrate such that a seal may be formed therebetween.

As depicted in FIG. 6, composition **40** may be formed as a cured-in-place gasket where the composition **40** is disposed and cured onto the anode flow field plate **12',** but not curably disposed onto the cathode flow field plate **28.** As depicted in FIG. 7, when the fuel assembly is assembled, the flow field plate **12'** and the cathode flow field plate **28** are compressed against one and the other whereby composition **40** acts as a cure-in-plane gasket. Composition **40** is adhesively and sealingly bonded to the flow field plate **12',** but only sealingly engages the cathode flow field plate **28.** Thus, the fuel cell assembly may be easily dissembled at this junction because composition **40** is not adhesively bonded to the cathode flow field plate **28.**

As depicted in FIG. 8, composition **40** may be a formed-in-place composition where the composition **40** sealingly and adhesively bonds the cathode flow field plate **28** to the flow field plate **12'.** As depicted in FIGs. 6-8, the composition **40** is shown as being a flat planar strip. The present invention, however, is not so limited.

As depicted in FIG. 9, composition **40** is a cure-in-place gasket and disposed as a bead onto the anode flow field plate **12'.** The composition **40** sealingly engages the cathode flow field plate **28** upon assembly of the fuel cell components. The present invention, however, is not so limited and other shapes, such as mating surfaces having protrusions and/or notches, may suitably be used.

Further, the composition **40** may be applied to the periphery or periphery portions of a fuel cell component. Desirably, the composition **40** not only covers the periphery of a fuel cell component, but also extends beyond of the perimeter or peripheral edges of the fuel cell component. As such, a fuel cell component having the composition **40** disposed and extended about its periphery or a portion of its periphery may be matingly aligned with another fuel cell component to sealingly engage the two components. In other words, the peripheral surfaces of fuel cell components may also be mating surfaces to which the inventive compositions may be applied for sealing engaging the fuel cell components.

FIG. 18 depicts a fuel cell having resin frames **115** between the membrane electrode assembly **136** and the separator plates **112, 128** to improve the durability of the membrane electrode assembly **136** and afford the correct spacing between the membrane electrode assembly **136** and separator plates **112, 128** during fuel cell assembly. In such a design, it is necessary have a seal between the separator plates **112, 128** and the resin frames **115.**

FIG. 19 depicts the membrane electrode assembly **136** having a cured or curable composition **140** at or near the peripheral portion **133** of the membrane electrode assembly **136.** As described below, the composition **140** is useful for sealing and/or bonding different components of the fuel cell to one and the other.

The present invention, however, is not limited to having fuel cell components, such as or the membrane electrode assembly **136,** with the composition **140** at or near the peripheral portion **133** of the membrane electrode assembly **136.** For example, as depicted in FIG. 20, the curable or curable composition **140** may be disposed at or near the peripheral portion **133** of the membrane electrode assembly **136** and cover peripheral edge portions **135** of the membrane electrode assembly **136.**

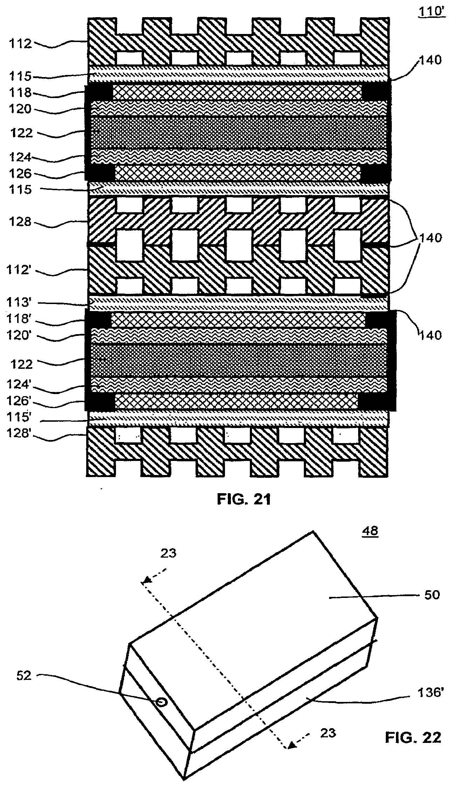

FIG. 21 shows a cross-sectional view of the basic elements of fuel cell **110** in which certain of the adjacent elements have a cured or curable composition **140** therebetween to provide a fuel assembly **110'.** As depicted in FIG. 21, composition **140** seals and/or bonds the anode flow field plate **112** to the gas diffusion layer **118** or the membrane electrode assembly **136.** The cathode field plate **128** is also sealed and/or bonded to the gas diffusion layer **126** or the membrane electrode assembly **136.** In this embodiment, fuel cell assembly **110'** often has a preformed membrane electrode assembly **136** anode with the anode catalyst **120** and the cathode catalyst **124** disposed thereon. The composition **140** disposed between the various components of the fuel cell assembly **110'** may be the same composition or may be different compositions. Additionally, as depicted in FIG. 21, composition **140** may seal and/or bond the cathode flow plate **128** to a component of a second fuel cell, such as a second anode flow field plate **112'.** Further, as depicted in FIG. 21, composition **140** may seal and/or bond the second anode flow field plate **112'** to a component of a second fuel cell, such as a second membrane electrode assembly **136'.** In such a manner, the fuel cell assembly **110'** is formed of multiple fuel cells having components sealingly and/or adhesively adjoined to provide a multiple cell electrochemical device.

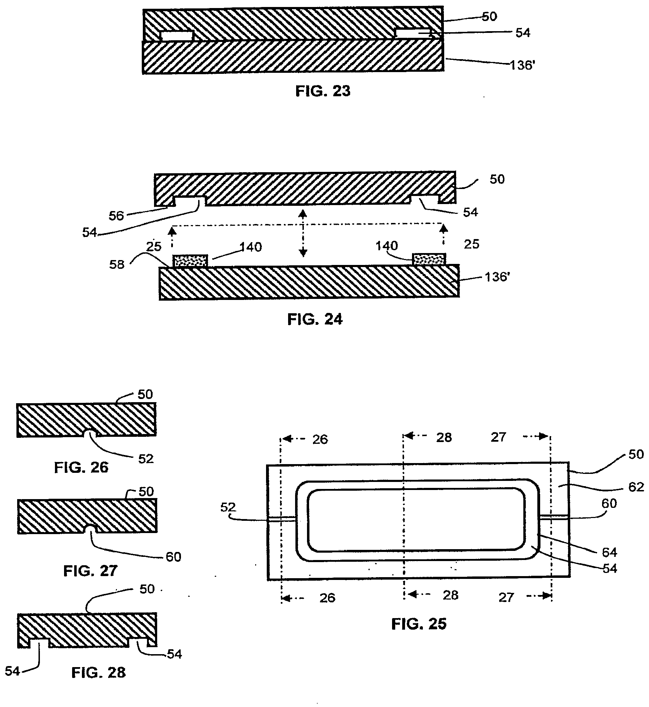

FIG. 22 is a perspective view of a mold **48** useful for forming cured-in-place gaskets according to the present invention. The mold **48** includes an upper mold member **50,** a lower mold member **136',** and an injection port **52,** interrelated as shown. In this embodiment, composition **140** is disposed onto the lower mold member **136'** to form a gasket thereat or thereon. In this embodiment of the present invention, the lower mold member **136'** is desirably a fuel cell component, for example membrane electrode assembly **136.** The present invention, however, is not limited to the use of the membrane electrode assembly **36** as the bottom mold component, and other fuel cell components may be the bottom mold component. As depicted in FIG. 25, the injection port **52** is in fluid communication with the mold cavity **54.**

FIG. 23 is a cross-sectional view of the mold **48** of FIG. 22 taken along the 23-23 axis. As depicted in FIG. 23, the upper mold member **50** includes a mold cavity **54.** Liquid gasket-forming compositions may be introduced into the mold cavity **54** via the injection port **52.**

FIG. 24 is a partial-break-away view of the mold **48** of FIG. 23. Mold member **50** includes a mating surface **56,** and mold member **136'** includes a mating surface **58.** The mold members **50** and **136'** may be aligned to one and the other, as depicted in FIG. 23, such that the mating surfaces **56** and **58** are substantially juxtaposed to one and the other. As depicted in FIG. 24 a gasket **140** is removed from the mold cavity **54** and is attached to the mating surface **58.**

As depicted in FIG. 25, the mold cavity **54** is in the shape of a closed perimetric design. Although mold cavity **54** is depicted as a rounded rectangle in FIG. 25, the present invention is not so limited and other shaped cavities may suitably be used. Further, while the cross-sectional shape of the mold cavity **54** is depicted as being rectangular or square in FIG. 24, the present invention is not so limited and other cross-sectional shapes may suitably be used, such as circular, oval, or shaped geometries having extensions for improved sealing.

As depicted in FIG. 25, the mold **50** may contain a second port **60.** The second port **60** is in fluid communication with the mold cavity **54.** The second port **60** may be used to degas the cavity **54** as it is being filled with the gasket-forming material. As the gasket-forming material in introduced into the cavity **54** via the port **52,** air may escape via the second port **60** to degas the mold cavity **54.** The size of the second port **60** is not limiting to the present invention. Desirably, the size, i.e., the cross-section extent, of the second port **60** is minimized to allow for the egress of air, but small enough to limit liquid flow of the gasket-forming material therethrough. In other words, the size of the second port **60** may be pin-hole sized where air can flow through while inhibiting substantial flow of liquid gasket-forming material. Further, the present invention is not limited to the use of a single port **52** or a single port **60,** and multiple ports may be used for the introduction of the gasket material and/or the venting of air.

FIG. 26 is a cross-sectional view of the mold member **50** taken along the 26-26 axis of FIG. 25. As depicted in FIG. 26, the injection port **52** may suitably be a cavity or bore in the mold member **50.** The portion of the injection port **52** may be threaded (not shown) or have a valve (not shown) or a tubing or a hose (not shown) through which the gasket-forming material may be delivered.

FIG. 27 is a cross-sectional view of the mold member **50** taken along the 27-27 axis of FIG. 25. As depicted in FIG. 27, the port **60** may suitably be a cavity or bore in the mold member **50.** The portion of the port **60** may have a valve (not shown) for controlling the egress of air and/or gasket-forming material.

FIG. 28 is a cross-sectional view of the mold member **50** taken along the 28-28 axis of FIG. 25. The mold cavity **54** is depicted as extending into the mold member **50** at its mating surface **56.**

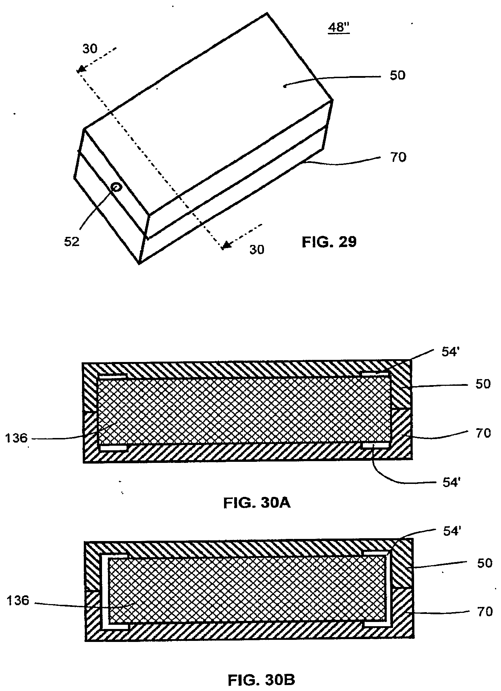

FIG. 29 is a perspective view of a mold **48"** useful for forming cured-in-place gaskets according to the present invention. The mold **48"** includes an upper mold member **50,** a lower mold member **70.** As depicted in FIGS. 30A and 30B, the mold members **50** and **70** are fittable together in a fashion as discussed above and are configured such that a fuel cell component, such as membrane electrode assembly **136** may be disposed therebetween. As depicted in FIG. 30A, the mold **48"** of the present invention may be used to form the gasket **140** on peripheral portions of the opposed sides of the fuel cell component **136.** As depicted in FIG. 30B, the mold **48"** of the present invention may also be used to form the gasket **140** on opposed sides and over the peripheral sides of the fuel cell component **136.**

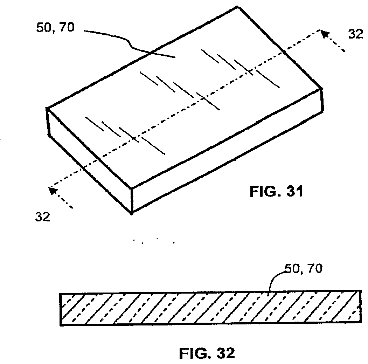

FIG. 31 is a perspective view of the mold member **50, 70** depicting that the mold member **50, 70** may be made of or may include a transparent material. Desirably, the mold member **50, 70** is transparent, i.e., transmissible or substantially transmissible, to actinic radiation, for example UV radiation. A cross-sectional view of the transparent mold member **50, 70** is depicted in FIG. 32.

The method of this aspect of the present invention may further include the step of degassing the cavity prior to injecting or while injecting the liquid, actinic radiation curable, gasket-forming composition. Desirably, the step of degassing includes degassing through the second port **60,** which is in fluid communication with the cavity **54.**

With the degassing of the cavity **54** and with the above-described fluid properties the liquid composition fully fills the cavity **54** without the need for excessive liquid handling pressures. Desirably, the liquid composition fully fills the cavity **54** at a fluid handling pressure of about 690 kPa (100 psig) or less.

After the composition is cured or at least partially cured, the mold members **50, 136'** or **50, 70** may be released from one and the other to expose the gasket, after which the gasket **140** may be removed from the mold cavity **54.** The gasket **140** is desirably disposed and/or affixed to the fuel cell component, for example membrane electrode assembly **136.**

Although the present invention has been described as top mold members **50, 70** as having a groove or mold cavity **54,** the present invention is not so limited. For example, the bottom mold member **136', 70** and/or the fuel cell component, such as membrane exchange membrane **136,** may have a groove or mold cavity for placement and formation of the seal in addition to or in replacement to the mold cavity **54** of the top mold members.

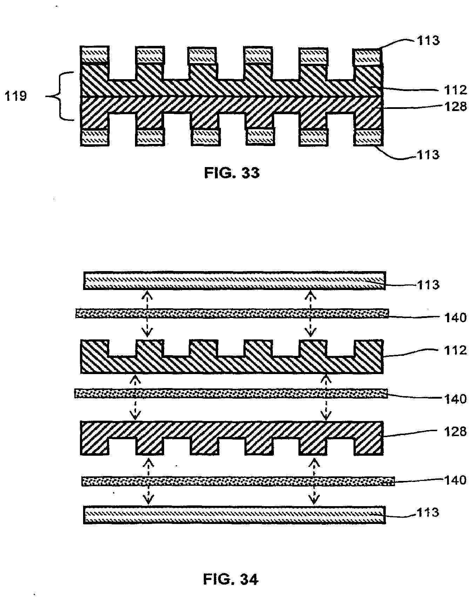

Moreover, the flow field plates of the fuel cell of the present invention may be bipolar plates, i.e., a plate having flow channels on opposed plate surfaces. For example, as depicted in FIGs. 33-34, the bipolar flow field plates **119** may be made from monopolar plates **112, 128** having a flow channel only on one side. The monopolar plates **112** and **128** may be secured to one and the other to from bipolar plates **119.** In one aspect of the present invention, the plates **112** and **128** are also sealed with the composition and by the methods of the present invention.

Because of the demanding physical property requirements of fuel cell barrier sealants, low surface energy polymers, such as polyisobutylene are desirable. In order to affect crosslinking, telechelic-functional polyisobutylenes are more desirable, such as vinyl-terminated polyisobutylene. The telechelic-functional polyisobutylenes may react with an appropriate soluble organohydrogenpolysiloxane crosslinker to form a cured sealant. Typically, prior to the present invention, the cross-linking was done in the presence of a platinum catalyst, as follows: 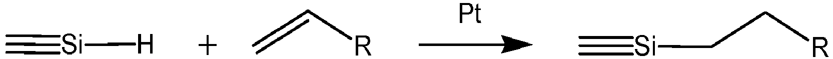 While hydrosilation-cured organic-based formulations are typically thermally cured using a platinum catalyst, such cures normally require at least one hour at an elevated temperature. Such curing conditions, however, limit continuous fabrication processes.

In one aspect of the present invention, the inventive liquid sealant compositions may be cured at or about room temperature within a short period of time, for example about 5 minutes or less. More desirably, the liquid composition is cured within 1 minute or less, for example, cured within 30 seconds or less.

The cured sealant composition used in the present invention comprises an alkenyl terminated hydrocarbon oligomer; a polyfunctional alkenyl monomer selected from 1,9-decadiene, 1,2,4-trivinylcyclohexane and combinations thereof; a silyl hardener having at least about two silicon hydride functional groups; and a hydrosilylation catalyst. The alkenyl terminated hydrocarbon oligomer is preferably an alkenyl terminated polyisobutylene oligomer, for example an alkenyl terminated diallyl polyisobutylene oligomer. Desirably, only about one hydrogen atom is attached to any silicon atom in the silyl hardener.

The inventive compositions used in the present invention have modified molecular structures, resulting in enhanced mechanical properties, cross-link densities and heats of reaction. The compositions of the present invention may be represented by the expression of (A-A + A_{f} + B_{f}), where "A-A" represents the alkenyl groups of the alkenyl terminated polyisobutylene oligomer, e.g., a diallyl polyisobutylene, "A" represents an alkenyl group, "B" represents a Si-H group and "f" refers to the number of corresponding functional groups.

When both the alkenyl and hydride are difunctional, the polymerization yields a linear structure. The number of functional hydride groups in such a linear structure, however, limits the overall functionality and cross-link density of the reacted network. By incorporating three or more alkenyl groups onto a single monomer or oligomer the cross-link density increases and mechanical properties are improved.

One useful polyfunctional alkenyl monomer having three or more alkenyl groups is TVCH, which has the below chemical formula:

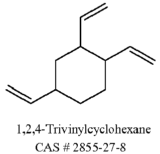

TVCH is a low viscosity (1.3 mPas), tri-functional monomer. It has a molar mass of 162.3 grams per mole. The present invention, however, is not limited to the use of a tri-functional monomer, and monomers with more than three alkenyl groups may suitably be used with the inventive compositions.

One useful polyfunctional alkenyl monomer having two alkenyl groups is 1,9-decadiene (CAS No. 1647-16-1), which has a molecular weight of 138.25 grams per mole.

The polyfunctional alkenyl monomer or a combination of alkenyl monomers may be present in amounts from about 0.01 weight percent to about 90 weight percent on a total composition basis. Desirably, the polyfunctional alkenyl monomer or a combination of alkenyl monomers may be present in amounts from about 0.1 weight percent to about 50 weight percent on a total composition basis. More desirably, the polyfunctional alkenyl monomer or a combination of alkenyl monomers may be present in amounts from about 1 weight percent to about 20 weight percent on a total composition basis, including from about 1 weight percent to about 10 weight percent on a total composition basis.

Compatibility is an important issue and it is desirable to incorporate only those multi-functional monomers that are compatible with the difunctional oligomer of the resent invention. Multifunctional monomers that separated into two-phases are not compatible. TVCH has been completely compatible with the polyisobutylene resin of the present invention. At weight percentages of up to about 20 weight percent TVCH, the resulting compositions of the present invention form clear single-phase solutions when mixed with the alkenyl resin.

Useful dialkenyl terminated linear poly(isobutylene) oligomers are commercially available from Kaneka Corporation, Osaka, Japan as EP200A, EP400A and EP600A. These three oligomers have the same functionality, but differ in molecular weight. EP200A, EP400A and EP600A have an approximate molecular weight (Mn) of 5,000; 10,000 and 20,000, respectively. The three oligomers also vary in viscosity from 944,300 centipoise ("cps"), 1,500,000 cps to 2,711,000 cps at 25°C, respectively.

The compositions of the present invention also include a silicone having at least two reactive silicon hydride functional groups, i.e., at least two Si-H groups. This component functions as a hardener or cross-linker for the alkenyl terminated polyisobutylene oligomer. In the presence of the hydrosilation catalyst, the silicon-bonded hydrogen atoms in the cross-linking component undergo an addition reaction, which is referred to as hydrosilation, with the unsaturated groups in the reactive oligomer. Since the reactive oligomer contains at least two unsaturated groups, the silicone cross-linking component contains at least two silicon-bonded hydrogen atoms to achieve the final cross-linked structure in the cured product. The silicon-bonded organic groups present in the silicone cross-linking component may be selected from the same group of substituted and unsubstituted monovalent hydrocarbon radicals as set forth above for the reactive silicone component, with the exception that the organic groups in the silicone cross-linker should be substantially free of ethylenic or acetylenic unsaturation. The silicone cross-linker may have a molecular structure that can be straight chained, branched straight chained, cyclic or networked.

The silicone cross-linking component may be selected from a wide variety of compounds, that desirably conforms to the formula below: 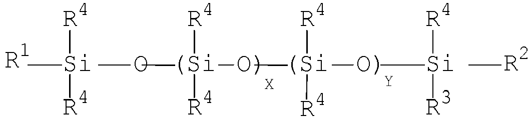 where at least two of R¹, R² and R³ are H; otherwise R¹, R² and R³ can be the same or different and can be a substituted or unsubstituted hydrocarbon radical from C₁₋₂₀, such as hydrocarbon radicals including alkyl, alkenyl, aryl, alkoxy, alkenyloxy, aryloxy, (meth)acryl or (meth)acryloxy; thus the SiH group may be attached at the terminal ends, attached as a pendent group along the siloxane backbone or both; R⁴ can also be a substituted or unsubstituted hydrocarbon radical from C₁₋₂₀, such as hydrocarbon radicals including a C₁₋₂₀ alkyl, alkenyl, aryl, alkoxy, alkenyloxy, aryloxy, (meth)acryl or (meth)acryloxy, and desirably is an alkyl group such as methyl; x is an integer from 10 to 1,000; and y is an integer from 1 to 20. Desirably, R² and R³ are not both hydrogen, e.g., R¹ is H and either R² or R³, but not both, is H. Desirably, R groups which are not H are methyl. The silicon hydride crosslinker should be present in amounts sufficient to achieve the desired amount of crosslinking and desirably in amounts of about 0.5 to about 40 percent by weight of the composition, more desirably from about 1 to about 20 percent by weight of the composition.

A bicyclic cross-linking compound was prepared in a single step reaction and was compatible with functional hydrocarbon elastomers of the present invention. Two moles of 2,4,6,8-tetramethylcyclotetrasiloxane was reacted with one mole of 1,9-decadiene in the presence of a catalyst to yield a liquid hydride that is compatible with hydrocarbon oligomers and reacts with alkenyl oligomers to form elastomers that are useful for sealing fuel cells and the like. Such useful bicyclic cross-linking compounds are useful with the practice of the present invention. The present invention, however, is not so limited and other bicyclic chemical structures, such as fluoroethers and the like, may suitably be used. The bicyclic crosslinker should be present in amounts sufficient to achieve the desired amount of crosslinking and desirably in amounts of about 0.5 to about 40 percent by weight of the composition, more desirably from about 1 to about 20 percent by weight of the composition.

The structure of the bicyclic cross-linking agent of the present invention is the reaction product of 1,9-decadiene and 2,4,6,8-tetramethylcyclotetrasiloxane, as shown below:

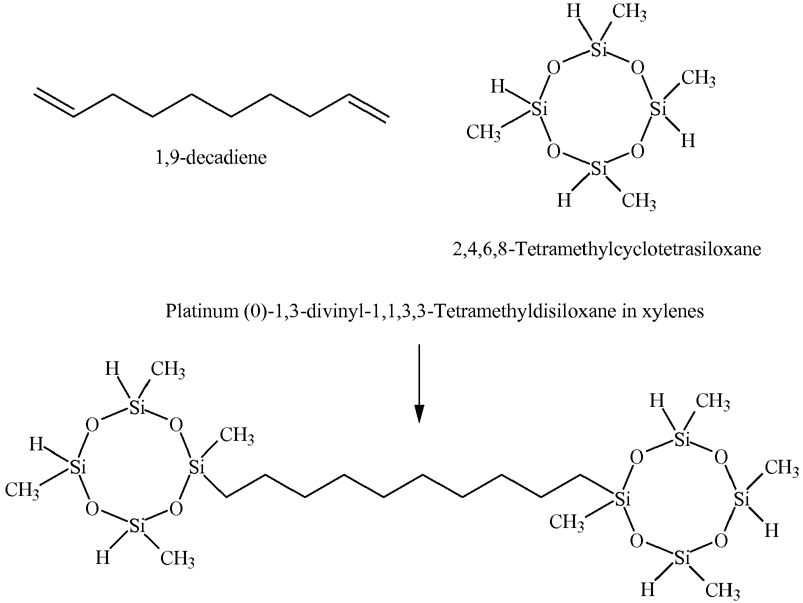

Useful platinum catalysts include platinum or platinum-containing complexes such as the platinum hydrocarbon complexes described in U.S. Patent Nos. 3,159,601 and 3,159,662; the platinum alcoholate catalysts described in U.S. Patent No. 3,220,972, the platinum complexes described in U.S. Patent No. 3,814,730 and the platinum chloride-olefin complexes described in U.S. Patent No. 3,516,946. Each of these patents relating to platinum or platinum-containing catalysts are hereby expressly incorporated herein by reference. Desirably, the platinum or platinum-containing complex is dicarbonyl platinum cyclovinyl complex, platinum cyclovinyl complex, platinum divinyl complex, or combinations thereof.

The platinum catalysts may be in sufficient quantity such that the composition cures at a temperature of about 130°C or less, desirably at a temperature of about 100°C or less, more desirably at a temperature of about 90°C or less. More desirably, a photoinitiator, such as one or more of the photoinitiators described below, so that compositions of the present invention may be cured by actinic radiation, such as ultraviolet radiation. Desirably, the liquid composition may be cured at or about room temperature within about 5 minutes or less. More desirably, the liquid composition is cured within 1 minute or less, for example, cured within 30 seconds or less.

In one aspect of the present invention, the liquid gasket-forming material may include actinic radiation curable (meth)acrylates, urethanes, polyethers, polyolefins, polyesters, copolymers thereof and combinations thereof. Desirably, the curable material includes a (meth)acryloyl terminated material having at least two (meth)acryloyl pendant groups. Desirably, the (meth)acryloyl pendant group is represented by the general formula: -OC(O)C(R¹)=CH₂, where R¹ is hydrogen or methyl. More desirably, the liquid gasket-forming material is a (meth)acryloyl-terminated poly(meth)acrylate. The (meth)acryloyl-terminated poly(meth)acrylate may desirably have a molecular weight from about 3,000 to about 40,000, more desirably from about 8,000 to about 15,000. Further, the (meth)acryloyl-terminated poly(meth)acrylate may desirably have a viscosity from about 200 Pas (200,000 cPs) to about 800 Pas (800,000 cPs) at 25°C (77°F), more desirably from about 450 Pas (450,000 cPs) to about 500 Pas (500,000 cPs). Details of such curable (meth)acryloyl-terminated materials may be found in European Patent Application No. EP 1 059 308 A1 to Nakagawa et al., and are commercially available from Kaneka Corporation, Japan.

In another aspect of the present invention, a curable sealant may be used in a liquid injection molding process. The separator plates and resin frames may be stacked and aligned in the mold. The components are stacked from bottom to top in the order of cathode resin frame, cathode separator, anode separator, and anode resin frame, for example. These fuel cell components may contain one or more continuous pathways or gates that allow the sealant to pass through each component and bond the components while providing a molded seal at the top, bottom and/or on the edge. The sealant has a pumpable viscosity in its uncured state to allow it to assume the shape of the mold. The curable sealant is injected into the heated mold, or die, at an appropriate temperature to bond and seal fuel cell components.

In another aspect of the present invention, a curable sealant is used in a liquid injection molding process. The two separator plates are stacked and aligned in the mold so that the coolant pathway sides of the separators are facing each other. The separators may contain one or more continuous pathways that allow the sealant to bond each component while providing a molded seal at each end and/or on the edge. The sealant has a pumpable viscosity in its uncured state to allow it to assume the shape of the mold. The curable sealant is injected into the heated mold, or die, at the appropriate temperature to bond and seal the separators. In the case where there is no continuous pathway, an edge-sealed bipolar plate is produced.

In another aspect of the present invention, a curable sealant is used in a liquid injection molding process. A fuel cell component, such as a resin frame, which may have one or more gates or holes, is placed in a mold, or die. The sealant has a pumpable viscosity in its uncured state to allow it to assume the shape of the mold. The sealant is injected into the heated mold, or die, at the appropriate temperature to cure the sealant. A resin frame with integrated seals on both sides, and possibly the edge, is provided.

It is also envisioned that selected components may be bonded in another process, then proceed to the method described in this invention to be bonded and sealed. As an example, an MEA and a bonded assembly are stacked and aligned in a molding process. The bonded assembly may be composed of the resin frames and separators, as an example. The MEA and the bonded assembly may contain one or more continuous pathways that allow the sealant to bond each component while providing a molded seal at each end and/or on the edge. The sealant has a pumpable viscosity in its uncured state to allow it to assume the shape of the mold. The curable sealant is injected into the heated mold, or die, at the appropriate temperature to bond and seal the separators.

In one aspect of the present invention, the cured sealant composition used in the present invention includes an alkenyl terminated polyisobutylene oligomer, for example an alkenyl terminated diallyl polyisobutylene oligomer; optionally, a polyfunctional alkenyl monomer; a silyl hardener or cross-linker having at least one hydrogen atom bonded to a silicon atom; and a hydrosilylation catalyst. Desirably, only about one hydrogen atom bonded is to any silicon atom in the silyl hardener.

Desirably, the liquid composition may also include a photoinitiator. A number of photoinitiators may be employed herein to provide the benefits and advantages of the present invention to which reference is made above. Photoinitiators enhance the rapidity of the curing process when the photocurable compositions as a whole are exposed to electromagnetic radiation, such as actinic radiation. Examples of suitable photoinitiators for use herein include, but are not limited to, photoinitiators available commercially from Ciba Specialty Chemicals, under the "IRGACURE" and "DAROCUR" trade names, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl) phosphine oxide and 2-hydroxy-2-methyl-1-phenyl-propan-1-one), and 819 [bis(2,4,6-trimethyl benzoyl) phenyl phosphine oxide] and "DAROCUR" 1173 (2-hydroxy-2-methyl-1-phenyl-1-propan-1-one) and 4265 (the combination of 2,4,6-trimethylbenzoyldiphenylphosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof. Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE" 819), and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., "IRGACURE" 1700), as well as the visible photoinitiator bis(η⁵-2,4-Cyclopentadien-1-yl)-bis[2,6-difluoro-3-(1H-pyrrol-1-yl)phenyl]titanium (e.g., "IRGACURE" 784DC). Useful actinic radiation includes ultraviolet light, visible light, and combinations thereof. Desirably, the actinic radiation used to cure the liquid gasket-forming material has a wavelength from about 200 nm to about 1,000 nm. Useful UV includes, but is not limited to, UVA (about 320 nm to about 410 nm), UVB (about 290 nm to about 320 nm), UVC (about 220 nm to about 290 nm) and combinations thereof. Useful visible light includes, but is not limited to, blue light, green light, and combinations thereof. Such useful visible lights have a wavelength from about 450 nm to about 550 nm.

The present invention, however, is not limited to only the use of UV radiation and other energy sources such as heat, pressure, ultraviolet, microwave, ultrasonic or electromagnetic radiation may be used to initiate polymerization of one or more of the compositions. Additionally, the initiator could be active without an activating agent. Further, the initiation process may be applied before, during and/or after assembly.

Optionally, a release agent may be applied to the cavity 54 prior to the introduction of the liquid composition. The release agent, if needed, helps in the easy removal of the cured gasket from the mold cavity. Useful mold release compositions include, but are not limited, to dry sprays such as polytetrafluoroethylene, and spray- on-oils or wipe-on-oils such as silicone or organic oils. Useful mold release compositions include, but are not limited, to compositions including C₆ to C₁₄ perfluoroalkyl compounds terminally substituted on at least one end with an organic hydrophilic group, such as betaine, hydroxyl, carboxyl, ammonium salt groups and combinations thereof, which is chemically and/or physically reactive with a metal surface. A variety of mold releases are available, such as those marketed under Henkel's Frekote brand. Additionally, the release agent may be a thermoplastic film, which can be formed in the mold shape.

In addition to the above-described (meth)acryloyl-terminated poly(meth)acrylate composition, the composition may further include a (meth)acryloyl-terminated compound having at least two (meth)acryloyl pendant groups selected from a (meth)acryloyl-terminated polyether, a (meth)acryloyl-terminated polyolefin, a (meth)acryloyl-terminated polyurethane, a (meth)acryloyl-terminated polyester, a (meth)acryloyl-terminated silicone, copolymers thereof, and combinations thereof.

The composition may further include a monofunctional (meth)acrylate. Useful monofunctional (meth)acrylates may be embraced by the general structure CH₂=C (R) COOR², where R is H, CH₃, C₂H₅ or halogen, such as Cl, and R² is C₁₋₈ mono- or bicycloalkyl, a 3 to 8-membered heterocyclic radial with a maximum of two oxygen atoms in the heterocycle, H, alkyl, hydroxyalkyl or aminoalkyl where the alkyl portion is C₁₋₈ straight or branched carbon atom chain. Among the specific monofunctional (meth)acrylate monomers particularly desirable, and which correspond to certain of the structures above, are hydroxypropyl methacrylate, 2-hydroxyethyl methacrylate, methyl methacrylate, tetrahydrofurfuryl methacrylate, cyclohexyl methacrylate, 2-aminopropyl methacrylate and the corresponding acrylates.

In another aspect of the present invention, the poly(meth)acrylate composition of the present invention may optionally include from about 0% to 90% poly(meth)acrylate polymer or copolymer, from about 0% to about 90% poly(meth)acrylate polymer or copolymer containing at least 2(meth)acrylate functional group; from about 0% by weight to about 90% by weight monofunctional and/or multifunctional (meth)acrylate monomers; from about 0% by weight to about 20% by weight photoinitiator; from about 0% by weight to about 20% by weight additives, such as antioxidants; from about 0% by weight to about 20% by weight fillers, such as fumed silica; from about 0% by weight to about 20% by weight rheology modifier; from about 0% by weight to about 20% by weight adhesion promoter; and/or from about 0% by weight to about 20% by weight fluorescent agents or pigments.

In another aspect of the present invention, the sealant composition **40** may include a polymerizable material not based on a linear PIB oligomer having terminal alkenyl or allyl group(s) and/or a cross-linking agent not having at least two hydrogen atoms each bonded to a silicone atom. For example, the compositions of the present invention may include a branched PIB oligomer backbone. Further, the PIB oligomer backbone, either linear or branched, may include internal or pendent alkenyl or other functional groups with the ends being optionally free of terminal alkenyl or allyl group(s). Moreover, the oligomeric backbone may include a co-polymer of PIB and another monomer, for example styrene. The co-polymer may be a random or block co-polymer.

Further, a linear or branched PIB polymer or co-polymer composition, being free or substantially free of terminal alkenyl and/or allyl groups, may suitably be used herein. For example, such a linear or branched PIB polymer or co-polymer composition having one or more Si-CH₃ end and/or pendent groups at one or more ends may be used herein. For example, the one or more end or pendent Si-CH₃ groups may be represented as: 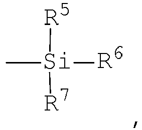 where R⁵, R⁶ and R⁷, which can be the same or different, are alkyl can be the same or different and can be a substituted or unsubstituted hydrocarbon radical from C₁₋₂₀ such hydrocarbon radicals including alkyl, alkenyl, aryl, alkoxy, alkenyloxy, aryloxy, (meth)acryl or (meth)acryloxy, and provided that at least one of the R⁵, R⁶ or R⁷ is an alkyl group such as methyl. The use of a radical initiator may be used to abstract hydrogen from the alkyl, e.g., methyl, group. The resulting alkyl or methyl radical is reactive with compounds having alkene or vinyl functionality. Suitable compounds having alkene or vinyl functionality include, but are not limited to, the above-described polyfunctional alkenyl monomers, such as TVCH and/or 1,9-decadiene. Prior to such radical initiated polymerization, the linear or branched PIB polymer or co-polymer composition is substantially free of any Si-H groups.

As another nonlimiting example, a linear or branched PIB polymer or co-polymer composition may be capped at one or more ends with tetraalkyldisiloxane, desirably tetramethyldisiloxane, represented as: 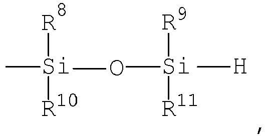 where R⁸, R⁹, R¹⁰ and R¹¹, which can be the same or different, are alkyl can be the same or different and can be a substituted or unsubstituted hydrocarbon radical from C₁₋₂₀, such as hydrocarbon radicals including alkyl, alkenyl, aryl, alkoxy, alkenyloxy, aryloxy, (meth)acryl or (meth)acryloxy, desirably an alkyl group such as methyl. Such compositions may be cured with the above-described hydrosilylation catalysts and, optionally, may also include the above-described polyfunctional alkenyl monomers, such as TVCH or 1,9-decadiene.

Additional examples of useful compositions of the present invention include linear or branched PIB polymer or co-polymer compositions having epoxide and/or vinyl ether terminal groups. Nonlimiting examples include PIB cycloaliphatic epoxide and PIB vinyl ether. A useful cycloaliphatic epoxide group includes 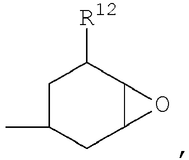 where R¹² is C₁₋₂₀ alkyl or H. Useful PIB vinyl ether groups include

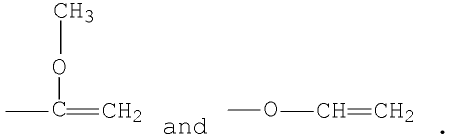

Further, compositions of the present invention may be cured or initiated for curing with a peroxide agent. In particular, the above-described compounds having one or more pendent or terminal Si-CH₃ may be initiated by peroxy agents. Useful peroxy agents, including peroxy crosslinkers and initiators, include the hydroperoxy polymerization initiators, for example, organic hydroperoxide initiators having the formula ROOH, where R generally is a hydrocarbon radical containing up to about 18 carbons, desirably an alkyl, aryl or aralkyl radical containing up to about 12 carbon atoms. Typical examples of such hydroperoxides include cumene hydroperoxide, methylethylketone hydroperoxide as well as hydroperoxides formed by the oxygenation of various other hydrocarbons such as methylbutene, cetane and cyclohexane. Other peroxy initiators such as hydrogen peroxide or materials such as organic peroxides or peresters which hydrolyoize or decompose to form hydroperoxides may also be employed.

In one aspect of the present invention, a two-part sealant is used to bond separator plates **12, 112, 28, 128** and resin frames **15, 115.** Part A of the sealant may contain a UV-activated initiator, which may be an acid, base, radical, anionic, and/or cationic initiator. Part B of the sealant may include a polymerizable monomer, oligomer, telechelic polymer, and/or functional polymer. The functional group could be, as an example, an epoxy, allyl, vinyl, (meth)acrylate, imide, amide or urethane. The resin frames **15, 115** are used for spacing within the fuel cell assembly **10, 110.** The resin frames **15, 115** are placed on the gas pathway sides of the separators **12, 112, 28, 128** and seals are provided between each element. In the first manufacturing line, a separator plate **12, 112,** typically a metal sheet, such as stainless steel, is desirably coated on both sides with part A of the sealant, cut, stamped to produce the necessary channels for reactive gas and coolant pathways, and activated with UV light. A resin frame 15, 115 is coated on at least one side with part B of the sealant and is assembled with the coated separator plate 12, 112 to provide an anode separator with bonded frame. In the second manufacturing line, a second separator plate 12, 112, typically a sheet of stainless steel, is desirably coated on both sides with part B of the sealant, cut, and stamped to produce the necessary channels for reactive gas and coolant pathways to form separator plate **28, 128.** A second resin frame **15, 115** coated on at least one side with part A of the sealant and irradiated with UV light is assembled with the separator plate **28, 128** to provide a cathode separator with a bonded frame. Finally, the two manufacturing lines meet so that the bonded anode separator having an exposed coating of part A of the sealant on one of its side and the bonded cathode separator having an exposed coating of part B of the sealant on one of its sides are aligned, part A and part B of the sealant react and seal the fuel cell interfaces and to form bonded assembly.

In another aspect of the present invention, a two-part sealant is used to bond the separator plates **12, 112, 28, 128.** Part A of the sealant contains a UV-activated initiator, which may be an acid, base, radical, anionic, and/or cationic initiator. Part B of the sealant is composed of a polymerizable monomer, oligomer, telechelic polymer, and/or functional polymer. The functional group could be, as an example, an epoxy, allyl, vinyl, (meth)acrylate, imide, amide or urethane. Part A is applied to the first separator plate, and part B is applied to the second separator plate. Part A is applied to the coolant pathway side of the anode separator **12, 112.** Part B is applied to the coolant pathway side of the cathode separator **28, 128.** On the anode separator **12, 112,** part A undergoes UV irradiation to activate the initiator, followed by compression assembly with the cathode separator **28, 128.** The separators **12, 112, 28, 128** are joined so that part A and part B react and seal the components to form the bipolar plate **119.**

In another aspect of the present invention, a one-part sealant is used to bond separator plates **12, 112, 28, 128** and resin frames **15, 115.** The sealant, which may be composed of a UV-activated acid, base, radical, anionic, and/or cationic initiator and polymerizable monomer, oligomer, telechelic polymer and/or functional polymer, may be applied to one substrate, radiated with UV light, and compressed with a second substrate to form the seal.

In another aspect of the present invention, a two-part composition is used to bond and seal. Part A is applied to the first substrate. Part B is applied to the second substrate. The two substrates are combined and fixtured. Polymerization may be achieved in its simplest form by bringing the two substrates together, or by combining the substrates and using some additional form of energy, such as pressure, heat, ultrasonic, microwave or any combinations thereof.

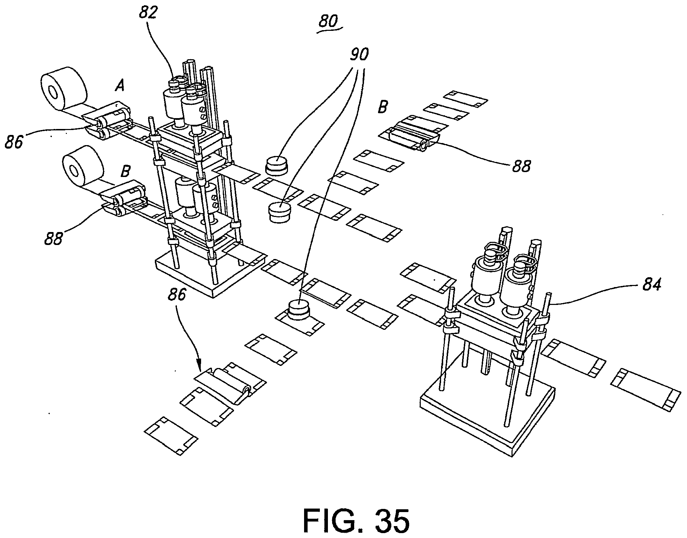

FIG. 35 depicts a system **80** for forming bonded assemblies, such as fuel cells or bonded fuel cell components, according the present invention. System **80** includes different stations **82, 84** for processing different fuel cell components. The system includes dispensers **86** and **88** for dispensing first and second parts, respectively, of a two-part sealant composition to coat different duel cell components. The system further includes sources **90** of energy, such as actinic radiation.

In another aspect of the present invention, a fuel cell stack may be prepared from a modular assembly and a gasket. A resin framed-MEA is produced in the first step. The anode and cathode resin frames are coated with a single component UV-activated sealant on one side of the resin frame. The sealant is activated by UV irradiation and the resin frames are fixtured on either side of the MEA. In the second step, the separators are bonded to the resin frames using a two-part sealant. In a two-component system, part A would be applied to substrate one, part B would be applied to substrate two. Part A and B when combined could polymerize in one form of this invention. The resin framed-MEA is coated with part A on the resin frames, and then activated by UV irradiation. At the same time, the reactant gas sides of the separators are coated with part B. The resin framed-MEA is fixtured with the anode and cathode separators to produce a unit cell (anode separator, anode resin frame, MEA, cathode resin frame, and cathode separator). In the next step, the unit cells are bonded together with a two-part sealant to form a module, containing a select number of unit cells, such as ten, for example. The unit cell is run through an operation to apply uncured polymer to the surface of one or more substrates. The coolant pathway side of the anode separator may be coated with part A and activated with UV irradiation. The coolant pathway side of the cathode separator may be coated with part B. The cells are stacked and fixtured to react part A with part B and seal the coolant pathways of the module. The separators at the ends of the module may not be coated in the process described above. In a separate manufacturing line, a gasket is produced from sheet metal and a UV-activated sealant. A roll of sheet metal is cut, coated with a single component UV-activated sealant, and placed under UV light. The fuel cell stack may be assembled by alternating the gaskets with the modules until the desired number of cells in the stack is achieved. It is also envisioned that the resin frames and separators may be coated on both sides with the appropriate sealant, fixtured to the first component and then fixtured to the second component.

In another aspect of the present invention, a fuel cell stack may be prepared from a modular assembly and a gasket. A resin framed-MEA is produced in the first step. Two resin frames are coated with a single component UV-activated sealant on one side of the resin frame. The sealant is activated by UV irradiation and the resin frames are fixtured on either side of the MEA. In the second step, a bonded separator is sealed to the resin framed-MEA using a two-part sealant. In a two-component system, part A of the sealant would be applied to a first substrate and part B of the sealant would be applied to a second substrate. Parts A and B of the sealant, when combined, polymerize to form a bonded assembly according to one aspect of the present invention. For example, an anode resin frame may be coated with part A of the sealant, and then activated by UV irradiation. A resin framed-MEA may be fixtured with the bonded separators to produce a unit cell (cathode separator, anode separator, anode resin frame, MEA, and cathode resin frame). The anode and cathode separators are bonded in another manufacturing line using a two-component sealant. The coolant pathway side of the anode separator is coated with part A of the sealant, and then activated by UV irradiation. The coolant pathway side of the cathode separator is coated with part B of the sealant, and fixtured to anode separator to react part A of the sealant with part B. In the next step, the unit cells are bonded together with a two-part sealant to form a module, containing a select number of unit cells, such as by way of example ten. The unit cell is run through a coating operation. The gas pathway side of the cathode separator may be coated with part A of the sealant and activated with UV irradiation. The cathode resin frame may be coated with part B of the sealant. The unit cells are stacked and fixtured to react part A of the sealant with part B of the sealant to produce a module of bonded unit cells. The separator and resin frame at the ends of the module would not be coated in the process described above. In a separate manufacturing line, a gasket is produced from sheet metal and a UV-activated sealant. A roll of sheet metal is cut, coated with a single component UV-activated sealant, and placed under UV light. The fuel cell stack may be assembled by alternating the gaskets with the modules until the desired number of cells in the stack is achieved. The resin frames and separators may be coated on both sides with the appropriate sealant, fixtured to the first component and then fixtured to the second component.

The following non-limiting examples are intended to further illustrate the present invention.

### EXAMPLES

### Example 1: Viscosity Data:

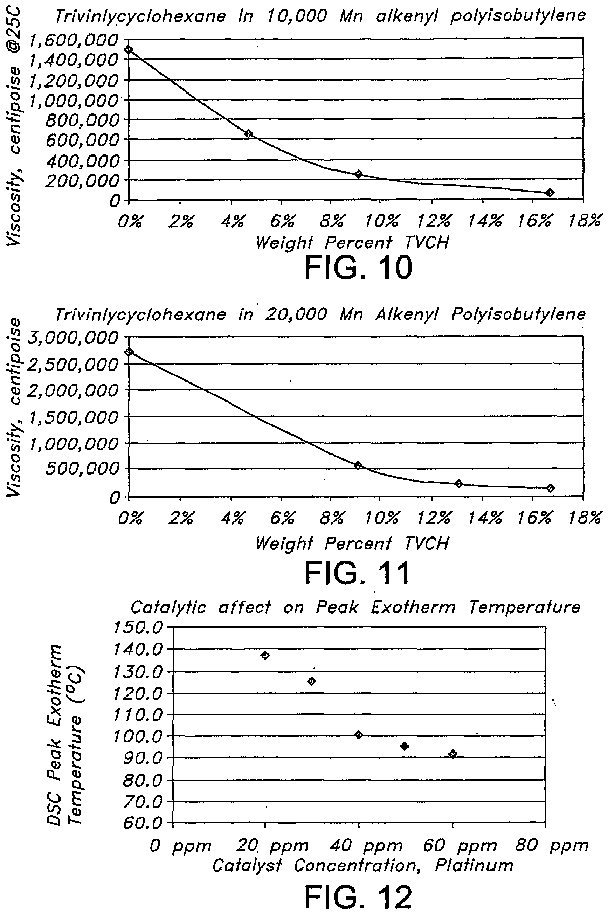

TVCH was very effective in reducing the viscosity of alkenyl functional polyisobutylene resins. Viscosity reduction was observed in a 5,000; 10,000 and 20,000 number average molecular weight (Mn) alkenyl functional polyisobutylene. Details are shown in FIGs. 11 and 12, Tables 1 and 2 for a 10,000 and 20,000 Mn alkenyl functional polyisobutylene for Inventive Composition Nos. 2 through 4 and 6 through 8 and for Comparative Composition Nos. 1 and 5.

**Table 1**

| **Effect Of TVCH On Viscosity In A 10,000 Mn Alkenyl Functional Polyisobutylene** | | | | |
|---|---|---|---|---|
| **Description** | **Compar. Comp. 1** | **Inv. Comp. 2** | **Inv. Comp. 3** | **Inv. Comp. 4** |
| Alkenyl Terminated Polyisobutylene (10,000 Mn), weight parts | 50 | 50 | 50 | 50 |
| TVCH, weight parts | 0 | 2.5 | 5 | 10 |
| Viscosity (Haake, 150 RheoStress), centipoise | 1,500,000 | 650,500 | 234,000 | 67,500 |
| Shear Rate [1/s] | 12 | 12 | 12 | 12 |
| Temperature, °C | 25 | 25 | 25 | 25 |

**Table 2**

| **Effect Of TVCH On Viscosity In A 20,000 Mn Alkenyl Functional Polyisobutylene** | | | | |
|---|---|---|---|---|
| | **Compar. Comp. 5** | **Inv. Comp. 6** | **Inv. Comp. 7** | **Inv. Comp. 8** |
| Alkenyl Terminated Polyisobutylene (20,000 Mn), weight parts | 50 | 50 | 50 | 50 |
| TVCH, weight parts | 0 | 5 | 7.5 | 10 |
| Viscosity (Haake, 150 RheoStress), centipoise | 2,711,000 | 561,000 | 212,750 | 127,500 |
| Shear Rate [1/s] | 12 | 12 | 12 | 12 |
| Temperature, °C | 25 | 25 | 25 | 25 |

TVCH was effective in reducing the viscosity of the alkenyl functional polyisobutylene resins. The resultant inventive compositions did not separate, and TVCH concentrations of up to about 20 weight percent with the alkenyl functional polyisobutylene resins formed clear single-phase solutions or compositions.

### Example 2: DSC And Stability Results:

Formulations were prepared with and without TVCH while keeping the molar ratio of Si-H to alkenyl groups and platinum to alkenyl groups constant. Comparative Composition No. 9 shown below in Table 3 was prepared without any TVCH and cured. The composition had a heat of reaction of 29 joules per gram. Inventive Composition Nos. 10 through 14, which have different amounts of platinum catalyst, contained five weight percent of TVCH based on 100 grams of alkenyl polyisobutylene. The heat of reaction increased to about 83 joules per gram for the inventive compositions containing TVCH.

**Table 3**

| **TVCH Addition To Difunctional Resins** | | | | | | |
|---|---|---|---|---|---|---|
| **Description** | **Compar. Comp. 9** | **Inv. Comp. 10** | **Inv Comp. 11** | **Inv. Comp. 12** | **Inv. Comp. 13** | **Inv. Comp. 14** |
| Alkenyl Terminated Polyisobutylene (5,000 Mn), weight parts | 100 | 100 | 100 | 100 | 100 | 100 |
| Polyalkyl Hydrogen Siloxane (2,230 Mn) (1), weight parts | 10.0 | 33.2 | 33.2 | 33.2 | 33.2 | 33.2 |
| TVCH, weight parts | | 5 | 5 | 5 | 5 | 5 |
| Platinum Catalyst (2), weight parts | 0.0073 | 0.0223 | 0.0334 | 0.0425 | 0.0557 | 0.0668 |
| Parts per million of Platinum per Alkenyl Group (mppm) | 20 | 20 | 30 | 40 | 50 | 60 |
| Molar Ratio of Si-H to Alkenyl | 1.5:1 | 1.5:1 | 1.5:1 | 1.5:1 | 1.5:1 | 1.5:1 |
| Exotherm Start (°C) | 68 | 107 | 94 | 72 | 66 | 70 |
| Exotherm Peak (°C) | 97 | 1.7 | 125 | 100 | 95 | 92 |
| Exotherm End (°C) | 130 | 187 | 180 | 152 | 145 | 140 |
| Heat of Reaction (Joules per gram) | 29.1 | 83.1 | 81.7 | 79.9 | 80.4 | 83.0 |

| | | | | | | |
|---|---|---|---|---|---|---|
| (1) CR-300, Available from Kaneka Corporation, Osaka, Japan. (2) 0.1M Platinum (0) -- 1,3-Divinyl-1,1,3,3-tetramethyldisiloxane complex in xylene | | | | | | |

The addition of TVCH increased the peak exotherm of the reaction from 96°C to 137°C as shown in Table 3. This was unexpected since vinyl groups are typically more reactive than allyl groups. The addition of TVCH provided some very desirable and unexpected results, which will be reviewed below. Since it is desirable to keep the curing temperature below 130°C and preferably below 110°C for PEM fuel cells operating at low temperatures (less than 100°C), a series of experiments were preformed to determine if it was possible to lower the peak exotherm temperature by changing the platinum catalyst concentration. From those experiments, i.e., Inventive Composition Nos. 10 through 14, the peak exotherm temperature could be reduced from 137°C to approximately 92°C by increasing the amount of platinum from 20 to 60 mppm based on the concentration of alkenyl groups, as shown in FIG. 12. This decrease in the peak exotherm temperature indicated that the activation temperature was significantly reduced, while the activation energy remained high. Thus, the experiments showed that the heat of reaction can be increased and the peak exotherm temperature can be reduced while maintaining a useful viscosity for screen-printing, liquid dispensing, liquid molding operations and other types of application methods. There is a practical limit to the benefit that can be derived from increasing the concentration of catalyst, as the rate of change in the peak exotherm decreased dramatically above 60 mppm within this set of experiments.

By increasing the concentration of catalyst to 15 mppm in Comparative Composition Nos. 15 through 18 without TVCH, gelling was observed within minutes during the mixing operation, as shown in Table 4. It was possible to affect this by reducing the amount of catalyst within the composition, as shown in Table 4. When using higher catalyst levels without the addition of TVCH, it was difficult to manufacture material as a single component composition and apply compositions without observing gelling.

**Table 4**

| **Catalyst Concentration Affects On Inventive Compositions Without Inhibitors** | | | | |
|---|---|---|---|---|
| **Description** | **Compar. Comp. 15** | **Compar. Comp. 16** | **Compar. Comp. 17** | **Compar. Comp. 18** |
| Alkenyl Terminated Polyisobutylene (5,000 Mn), grams | 100 | 100 | 100 | 100 |
| Polyalkyl Hydrogen Siloxane (2,230 Mn) (1), grams | 6.8 | 6.8 | 6.8 | 6.8 |
| TVCH, grams | 0 | 0 | 0 | 0 |
| Platinum Catalyst (2), microliters | 8.0 | 6.0 | 4.0 | 2.0 |
| Parts per million of Platinum per Alkenyl Group (mppm) | 20 | 15 | 10 | 5 |
| Notes: | Gelled Fast | Gelled Fast | | |
| Pot Life (Minutes) | 8 | 8 | 15 | 60 |

| | | | | |
|---|---|---|---|---|
| (1) CR-300, Available from Kaneka Corporation, Osaka, Japan. (2) 0.1M Platinum (0) -- 1,3-Divinyl-1,1,3,3-tetramethyldisiloxane complex in xylene | | | | |

The use of inhibitors can help reduce the change in viscosity as a function of time. However, inhibitors have the potential to diffuse or be extracted out of the composition when used within a fuel cell causing undesirable affects in the performance of the cell. These changes can include but are not limited to changes in the hydrophobic/hydrophilic balance and fuel cell catalyst, which are reflected in a decrease in the overall output of the device.

The unexpected stabilizing affects of TVCH allow the use of higher concentrations of platinum catalyst, the ability to manufacture compositions without gelling and the ability to improve stability using moieties that cross-link into the polymer network thereby reducing the diffusion or extraction of the species in the final application. TVCH can also be used along with inhibitors that do not cross-link into the final network at low levels.

When TVCH was added to the inventive compositions, unexpected improvements in the shelf life of the mixed inventive compositions were observed. This is highlighted in Table 5 by comparing Inventive Composition Nos. 20 through 24 with Comparative Composition No. 19. Inventive Composition Nos. 20 through 24 with TVCH experienced a slower increase in viscosity as a function of time when compared to Comparative Composition No. 19 that did not contain TVCH. For example, Comparative Composition No. 19 shown in Table 5 without TVCH gelled during the mixing process at room temperature within minutes. The addition of TVCH at the same and higher catalyst loading level resulted in the compositions remaining in the liquid state for a longer period of time, providing a practical amount of time for applying or molding the material onto a substrate.

**Table 5**

| **Affect Of TVCH On Stability** | | | | | | |
|---|---|---|---|---|---|---|
| **Description** | **Compar. Comp. 19** | **Inv. Comp. 20** | **Inv. Comp. 21** | **Inv. Comp. 22** | **Inv. Comp. 23** | **Inv. Comp. 24** |
| Alkenyl Terminated Polyisobutylene (5,000 Mn), grams | 100 | 100 | 100 | 100 | 100 | 100 |
| Polyalkyl Hydrogen Siloxane (2,230 Mn) (1), grams | 6.8 | 22.2 | 33.3 | 44.6 | 66.4 | 26.6 |
| TVCH, grams | 0 | 5 | 5 | 5 | 5 | 5 |
| Platinum Catalyst (2), microliters | 8.0 | 26.1 | 26.1 | 26.1 | 26.1 | 78.2 |
| Parts per million of Platinum per Alkenyl Group (mppm) | 20 | 20 | 20 | 20 | 20 | 60 |
| Molar Ratio of Si-H to Alkenyl | 1.2:1 | 1.0:1 | 1.5:1 | 2.0:1 | 3.0:1 | 1.2:1 |
| Notes: | Gelled Fast | | | | | |
| Pot Life (Minutes) | 8 | >60 | >60 | >60 | >60 | >60 |

| | | | | | | |
|---|---|---|---|---|---|---|
| (1) CR-300, Available from Kaneka Corporation, Osaka, Japan. (2) 0.1M Platinum (0) -- 1,3-Divinyl-1,1,3,3-tetramethyldisiloxane complex in xylene | | | | | | |

### Example 3: Formulated Physical Property Data (Compression Set, Hardness & Mechanical Properties):

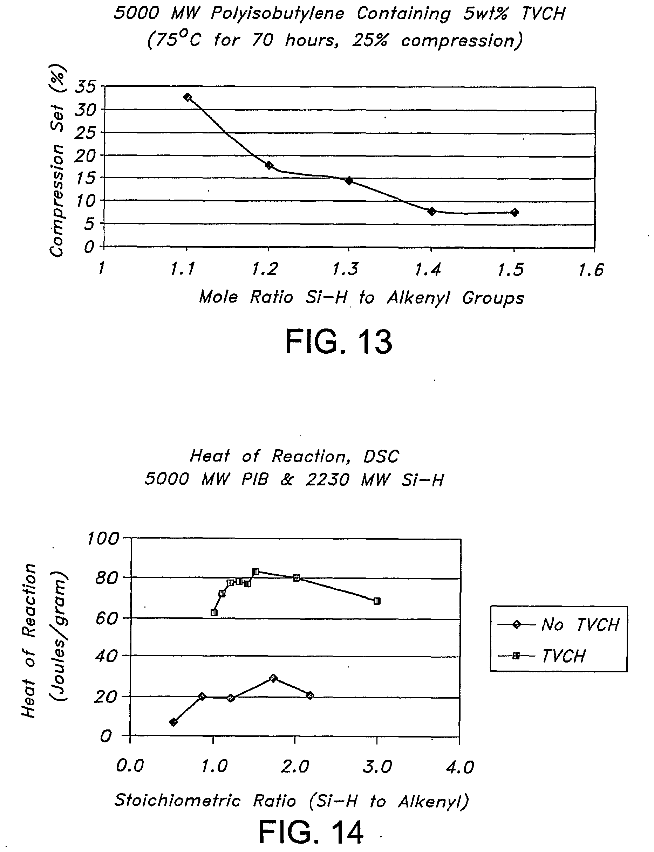

Inventive compositions 25 through 30 were prepared using a constant ratio of TVCH to alkenyl terminated PIB while varying the amount of Si-H to the total number of alkenyl groups by varying the polyalkyl hydrogen siloxane content to measure the change in physical, mechanical and thermodynamic properties. The ratio of the number of "A" functional groups ("N_{A}") to the number of "B" functional groups ("N_{B}") is referred to as the stoichiometric imbalance (r = N_{A}/N_{B}). Tables 6 and 7 and FIG. 13 show that as the stoichiometric imbalance increased, the ratio of Si-H to alkenyl groups increased, compression set values decreased while mechanical properties increased. Optimal properties were obtained at a stoichiometric imbalance of approximately 1.4 to 1.0 (Si-H to alkenyl groups). The absolute value of the compression set decreased dramatically to 8%, which is very low for an elastomer and unexpected.

Comparative Composition No. 31 was prepared with the alkenyl terminated PIB and the polyalkyl hydrogen siloxane at a molar ratio of 1.5:1 of Si-H to the total number of alkenyl groups. Comparative Composition No. 31 did not contain any TVCH. An inhibitor -- 3,5-dimethyl-1-hexyne-ol -- was added to Comparative Composition No. 31 to inhibit the cure rate of the composition so that the compression test could be performed. Without any inhibitor, the composition gelled within a couple of minutes. Comparative Composition No. 31 was observed to have a compression set of 22%. As shown in Table 6, Inventive Composition No. 30 had significantly improved compression set properties as compared to Comparative Composition No. 31. The Si-H to alkenyl molar ratio for Inventive Composition No. 30 and Comparative Composition No. 31 were the same at 1.5:1.

**Table 6**

| **Compression Set For 5000 Mn Alkenyl Polvisobutvlene At 5 wt% TVCH And With 2230 Mn Polyalkyl Hydrogen Siloxane** | | |
|---|---|---|
| **Description** | **Si-H to Alkenyl Molar Ratio** | **Compression Set at 75°C for 70 Hours** |
| Inventive Composition 25 | 1.0 : 1 | n/a |
| Inventive Composition 26 | 1.1 : 1 | 32.6 |
| Inventive Composition 27 | 1.2 : 1 | 17.7 |
| Inventive Composition 28 | 1.3 : 1 | 14.7 |
| Inventive Composition 29 | 1.4 : 1 | 7.9 |
| Inventive Composition 30 | 1.5 : 1 | 7.8 |
| Comparative Composition 31 | 1.5 : 1 | 22.2 |

The increase in tensile strength, modulus, hardness and corresponding decrease in elongation at break was consistent with the increase in the cross-link density as the ratio of Si-H to alkenyl groups increased.

**Table 7**

| **Mechanical Properties As A Function Of Si-H To Alkenyl Ratio** | | | | | | |
|---|---|---|---|---|---|---|
| **Description** | **Inv. Comp. 25** | **Inv. Comp. 26** | **Inv. Comp. 27** | **Inv. Comp. 28** | **Inv. Comp. 29** | **Inv. Comp. 30** |
| Si-H To Alkenyl Molar Ratio | 1.0:1 | 1.1:1 | 1.2:1 | 1.3:1 | 1.4:1 | 1.5:1 |
| Reaction Properties: | | | | | | |
| Exotherm Onset (°C) | 59 | 54 | 55 | 53 | 50 | 70 |
| Exotherm Peak (°C) | 88 | 87 | 87 | 85 | 96 | 92 |
| Heat of Reaction (Joules per gram) | 62 | 72 | 77 | 78 | 77 | 83 |
| Physical Properties: | | | | | | |
| Cure Temp. (°C) | 110 | 110 | 110 | 110 | 110 | 110 |
| Cure Time. (Min.) | 60 | 60 | 60 | 60 | 60 | 60 |
| Tensile Strength (psi) | 68 | 67 | 138 | 160 | 166 | 140 |
| 50% Modulus (psi) | 15 | 28 | 50 | 62 | 96 | 88 |
| Elongation at Break (%) | 108 | 89 | 101 | 95 | 83 | 76 |
| Shore "A" Hardness | 12 | 17 | 36 | 41 | 45 | 45 |
| Compression Set at 75°C for 70 Hours | n/a | 33 | 18 | 15 | 8 | 8 |

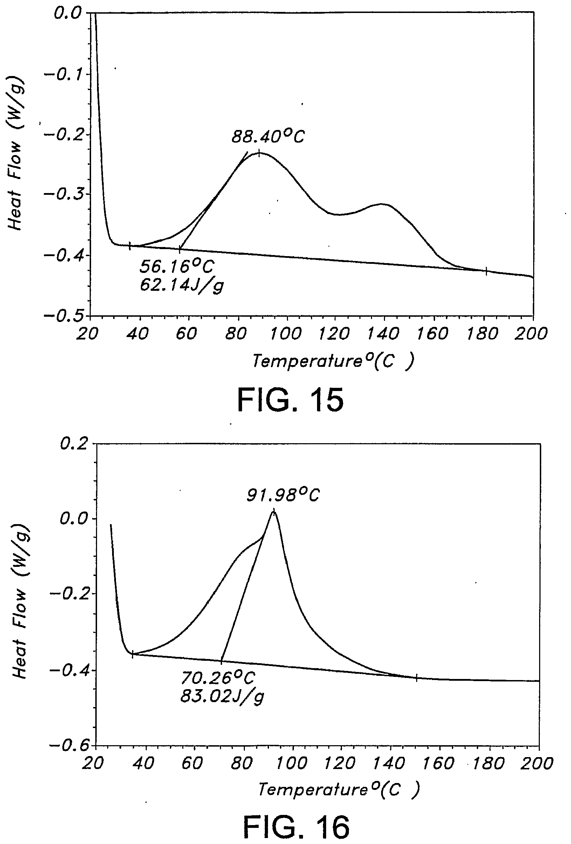

It was observed that optimal mechanical properties occur near the maximum value for the heat of reaction as shown in Table 7 and FIG. 14. It was also observed that at a stoichiometric ratio of 1:1, the enthalpy from the heat of reaction plotted as a function of temperature was bimodal with an upper temperature limit of 180°C (see FIG. 15). Inventive compositions based on a stoichiometric imbalance had a single asymmetric curve with an upper temperature limit of approximately 140°C (see FIG. 16). A lower temperature is better for fuel cells operating below 100°C. The majority of the reaction was completed under 120°C, which is desirable for low temperature PEM fuel cells. The performance of the PEM can be severely degraded at elevated temperatures; therefore it is desirable to maintain cure temperatures below 130°C, such as below 120°C.

The infrared spectrums were compared for compositions with a 1:1 and 1.5:1 stoichiometric ratio using a mathematical subtraction method to validate that an excess concentration of Si-H is present in the cured network containing an excess amount of Si-H compare to a stoichiometric network. The subtraction spectrum was consistent with the spectra for the neat cross-linker from 4000 to 1200 cm⁻¹.

### Example 4: Inventive Compositions With 1,9-Decadiene:

Inventive Composition No. 32 was prepared as shown below in Table 8 with 1,9-decadiene and a bicyclic decadiene cross-linker. This composition demonstrated excellent reaction data, e.g., exothermic data and heat of reaction.

**Table 8**

| **Decadiene Addition To Difunctional Resins** | |
|---|---|
| **Description** | **Inventive Composition 32** |
| Alkenyl Terminated Polyisobutylene (5,000 Mn), grams | 50 |
| Bicyclic Decadiene Cross-linker (1), grams | 5 |
| 1,9-decadiene, grams | 9.4 |
| Platinum Catalyst (2), microliters | 4.6 |
| Parts per million of Platinum per Alkenyl Group (mppm) | 5 |
| Exotherm Start (°C) | 59 |
| Exotherm Peak (°C) | 86 |
| Heat of Reaction (Joules per gram) | 104.7 |

| | |
|---|---|
| (1) Reaction product of 1,,9-decadiene and 2,4,6,8-tetramethylcyclotetrasiloxane. (2) 0.1M Platinum (0) -- 1,3-Divinyl-1,1,3,3-tetramethyldisiloxane complex in xylene | |

### Example 5:

Inventive base formulations were prepared from the components shown in Table 9 and as follows below:

**Table 9**

| **Polyisobutylene Sealant Base Formulation (Inventive Base Formulation A)** | | |
|---|---|---|
| **Supplier** | **Chemical Description** | **Wt %** |
| Kaneka | Epion EP200A | 64.50% |
| Kaneka | Epion EP400A | 21.50% |
| Degussa | TVCH reactive diluent | 1.17% |
| Kaneka | CR300 Crosslinker | 12.83% |
| | Total: | 100.00% |

| | | |
|---|---|---|
| EP200A and EP400A are resins supplied by Kaneka. CR300 is a phenylsiloxane crosslinker supplied by Kaneka. | | |

### Mixing Procedure:

1. Add all ingredients.
2. Mix with Cowles blade for 15 minutes until homogeneous.

A UV-activatable platinum complex was used and the hydrosilation reaction was initiated upon irradiation and continues after removal of the radiation (post cure).

UV-labile platinum complexes examined include: 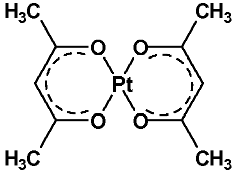 Platinum (II) 2,4-pentanedionate ("Pt(acac)₂") 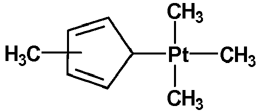 (Trimethyl)methylcyclopentadienylplatinum (IV) ("TMMCP")

As shown below, substantial reductions in cure time were realized along with elimination of potentially deleterious heat.

### Example 6: W-Cured Polyisobutylene/Silane

Inventive Base Formulation A used in Example 5, i.e., unsaturated PIB with phenylsilane crosslinker, was used in this example.

The following catalyst combinations were evaluated in Inventive Base Formulation A:
a. Inventive Composition No. 33 (Pt(acac)₂, (49.6% Pt) @ 100 ppm Pt) was prepared by mixing 100g of Inventive Base Formulation A with 0.68g of 3% Pt(acac)₂ in CH₂Cl₂.
b. Inventive Composition No. 34 (TMMCP, (61.1% Pt) @ 50 ppm Pt) was prepared by mixing 100g of Inventive Base Formulation A with 0.16g of 5% TMMCP in EtOAc.
c. Inventive Composition No. 35 (TMMCP, (61.1% Pt) @ 100 ppm Pt) was prepared by mixing 100g of Inventive Base Formulation A with 0.32g of 5% TMMCP in EtOAc.

5 gram samples of Inventive Compositions Nos. 33-35 were placed in small aluminum pans and were irradiated with the Oriel lamp at 8 mW/cm² UV-B or the Zeta 7216 at 100 mW/cm² UV-B, as indicated below in Table 10.

**Table 10**

| **Oriel Intensity: 8 mW/cm²** | | | | | |
|---|---|---|---|---|---|
| **Zeta Intensity: 100 mW/cm²** | | | | | |
| **Inventive Composition** | **Irradiation Time (min)** | **Lamp** | **Cured Properties** | **30 Minute Properties** | **24 Hour Properties** |
| 33 | 5 | Oriel | Viscous, wet | Tacky, firm | Slight tack, firm |
| 34 | 5 | Oriel | Tacky, some cure | No change | Slight tack, firm |
| 35 | 5 | Oriel | Very slight tack; firm | No change | No change |
| 35 | 1 | Zeta | Tacky, firm | No change | No change |

The above results confirm the feasibility UV-activated platinum cure, with cure times greatly reduced from heat cure. Inventive Composition No. 35 cured with the Oriel lamp exhibited surface properties as good or better than the heat cured control. As the data shows, it appears more desirable to utilize lower intensities for longer time periods than higher intensities for shorter irradiation times.

### Example 7: UV-Cured Polyisobutylene/Silane, 200 ppm Pt

Inventive Base Formulation A from Example 5, i.e. unsaturated PIB with phenylsilane crosslinker was used in this example

The following catalyst combinations were evaluated:
a. Inventive Composition No. 36 (Pt(acac)₂, (49.6% Pt) @ 200 ppm Pt) was prepared by mixing 50g of Inventive Base Formulation A with 0.68g of 3% Pt(acac)₂ in CH₂Cl₂.
b. Inventive Composition No. 37 (TMMCP, (61.1% Pt) @ 200 ppm Pt) was prepared by mixing 50g Inventive Base Formulation A with 0.32g of 5% TMMCP in EtOAc.

5 gram samples of Inventive Composition Nos. 36 and 37 were placed in small aluminum pans and were irradiated with the Oriel lamp at 8 mW/cm² UV-B, as indicated below in Table 11.

**Table 11**

| **Oriel Intensity: 8 mW/cm²** | | | | | |
|---|---|---|---|---|---|
| **Inventive composition** | **Irradiation Time (min)** | **Lamp** | **Cured Properties** | **30 Minute Properties** | **24 Hour Properties** |
| 36 | 1 | Oriel | No cure | Very tacky, soft | Slight tack, firm |
| 36 | 2 | Oriel | No cure | Tacky, soft | Slight tack, firm |
| 36 | 3 | Oriel | Tacky, soft | Slight tack, firm | Dry surface, firm |
| 37 | 1 | Oriel | Very tacky, soft | Tacky, soft | Slight tack, firm |
| 37 | 2 | Oriel | Slight tack, soft | No change | Dry surface, firm |
| 37 | 3 | Oriel | Slight tack, firm | No change | Dry surface, firm |

As shown above, optimum cure is obtained after 3 minutes of irradiation, with post cure noticeably evident after 24 hours and most noticeable in the Pt(acac)₂ systems.

## Claims

1. A method for forming a fuel cell comprising:
providing a fuel cell component;
providing a mold having a cavity;
positioning the mold so that the cavity is in fluid communication with the fuel cell component;
applying a curable liquid sealant composition into the cavity; and
curing the composition, wherein the sealant composition comprises:
an alkenyl terminated hydrocarbon oligomer;
a polyfunctional alkenyl monomer selected from 1,9-decadiene, 1,2,4-trivinylcyclohexane and combinations thereof;
a silyl hardener having at least about two silicon hydride functional groups; and
a hydrosilylation catalyst.

2. The method of claim 1, wherein the fuel cell component is selected from the group consisting of a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

3. The method of claim 1, wherein the fuel cell component is a membrane electrode assembly comprising a gas diffusion layer.

4. The method of claim 3, wherein the step of applying the sealant further comprises:
applying pressure to the sealant so that the sealant penetrates the gas diffusion layer.

5. The method of claim 3, wherein the step of applying the sealant further comprises:
applying the sealant so that an edge of the membrane electrode assembly is fully covered with the sealant.

6. The method of claim 1, wherein, the step of curing the composition comprises:
thermally curing the sealant at a temperature of about 130°C or less.

7. The method of claim 1, wherein, the step of curing the composition comprises:
providing actinic radiation to cure the sealant at about room temperature.

8. The method of claim 7, wherein the mold is transmissive to actinic radiation.

9. The method of claim 7, wherein the curable sealant composition comprises actinic a radiation curable material selected from the group consisting of (meth)acrylate, urethane, polyether, polyolefin, polyester, copolymers thereof and combinations thereof.

10. The method of claim 7, wherein the curable sealant composition comprises a telechelic-functional polyisobutylene, a silyl crosslinker having at least about two silicon hydride functional groups, a platinum catalyst and a photoinitiator.

11. The method of claim 1, wherein the alkenyl terminated hydrocarbon oligomer comprises an alkenyl terminated polyisobutylene oligomer.

12. A membrane electrode assembly having a cured sealant composition disposed over peripheral portions of the assembly, wherein the cured sealant composition comprises:
an alkenyl terminated diallyl polyisobutylene oligomer,
a polyfunctional alkenyl monomer selected from 1,9-decadiene, 1,2,4-trivinylcyclohexane and combinations thereof;
a silyl hardener having at least about two silicon hydride functional groups;
a hydrosilylation catalyst; and
a peroxide initiating or crosslinking agent.

## Patentansprüche

1. Verfahren zum Ausbilden einer Brennstoffzelle, umfassend:
Bereitstellen einer Brennstoffzellkomponente;
Bereitstellen einer Form mit einem Hohlraum;
Anordnen der Form derart, dass der Hohlraum sich in Fluidverbindung mit der Brennstoffzellkomponente befindet;
Auftragen einer härtbaren flüssigen Dichtungszusammensetzung in den Hohlraum; und
Aushärten der Zusammensetzung, wobei die Dichtungszusammensetzung umfasst:
ein Alkenyl-terminiertes Kohlenwasserstoffoligomer;
ein polyfunktionelles Alkenylmonomer, ausgewählt aus 1,9-Decadien, 1,2,4-Trivinylcyclohexan und Kombinationen daraus;
einen Silylhärter mit mindestens etwa zwei funktionellen Siliziumhydridgruppen; und
einen Hydrosylylierungskatalysator.

2. Verfahren nach Anspruch 1, wobei die Brennstoffzellkomponente ausgewählt ist aus der Gruppe bestehend aus einer Kathodenströmungsfeldplatte, einer Anodenströmungsfeldplatte, einem Harzrahmen, einer Gasdiffusionsschicht, einer Anodenkatalysatorschicht, einer Kathodenkatalysatorschicht, einem Membranelektrolyten, einem Membran-Elektroden-Einheitsrahmen sowie Kombinationen daraus.

3. Verfahren nach Anspruch 1, wobei die Brennstoffzellkomponente eine Membran-Elektroden-Einheit ist, die eine Gasdiffusionsschicht umfasst.

4. Verfahren nach Anspruch 3, wobei der Schritt des Auftragens des Dichtungsmaterials ferner umfasst:
Auftragen von Druck auf das Dichtungsmaterial, sodass das Dichtungsmaterial die Gasdiffusionsschicht durchdringt.

5. Verfahren nach Anspruch 3, wobei der Schritt des Auftragens des Dichtungsmaterials ferner umfasst:
Auftragen des Dichtungsmaterials, sodass eine Kante der Membran-Elektroden-Einheit vollständig mit dem Dichtungsmaterial bedeckt ist.

6. Verfahren nach Anspruch 1, wobei der Schritt des Aushärtens der Zusammensetzung umfasst:
thermisches Aushärten des Dichtungsmaterials auf einer Temperatur von etwa 130 °C oder weniger.

7. Verfahren nach Anspruch 1, wobei der Schritt des Aushärtens der Zusammensetzung umfasst:
Bereitstellen aktinischer Strahlung zum Aushärten des Dichtungsmaterials auf etwa Raumtemperatur.

8. Verfahren nach Anspruch 7, wobei die Form für aktinische Strahlung durchlässig ist.

9. Verfahren nach Anspruch 7, wobei die härtbare Dichtungszusammensetzung ein durch aktinische Strahlung härtbares Material umfasst, das ausgewählt ist aus der Gruppe bestehend aus (Meth)acrylat, Urethan, Polyether, Polyolefin, Polyester, Copolymeren davon und Kombinationen daraus.

10. Verfahren nach Anspruch 7, wobei die härtbare Dichtungszusammensetzung ein telechelisches funktionelles Polyisubutylen, einen Silylvernetzer mit mindestens etwa zwei funktionellen Siliziumhydridgruppen, einen Platinkatalysator und einen Photoinitiator umfasst.

11. Verfahren nach Anspruch 1, wobei das Alkenyl-terminierte Kohlenwasserstoffoligomer ein Alkenyl-terminiertes Polyisobutylenoligomer umfasst.

12. Membran-Elektroden-Einheit mit einer ausgehärteten Dichtungszusammensetzung, die auf den umlaufenden Abschnitten der Einheit angeordnet ist, wobei die ausgehärtete Dichtungszusammensetzung umfasst:
ein Alkenyl-terminiertes Diallyl Polyisobutylenoligomer,
ein polyfunktionelles Alkenylmonomer, ausgewählt aus 1,9-Decadien, 1,2,4-Trivinylcyclohexan und Kombinationen daraus;
einen Silylhärter mit mindestens etwa zwei funktionellen Siliziumhydridgruppen;
einen Hydrosylylierungskatalysator; und
einen Peroxidinitiator oder -vernetzer.

## Revendications

1. Procédé de formation d'une pile à combustible comprenant :
la fourniture d'un composant de pile à combustible ;
la fourniture d'un moule ayant une cavité ;
le positionnement du moule de sorte que la cavité est en communication fluidique avec le composant de pile à combustible ;
l'application d'un agent d'étanchéité liquide durcissable dans la cavité ; et
le durcissement de la composition, dans lequel la composition d'agent d'étanchéité comprend ;
un oligomère d'hydrocarbure à terminaison alcényle ;
un monomère alcényle polyfonctionnel choisi parmi le 1,9-décadiène, le 1,2,4-trivinylcyclohexane et des combinaisons de ceux-ci.
un agent de durcissement silyle ayant au moins environ deux groupes fonctionnels d'hybride de silicium ; et
un catalyseur d'hydrosilylation.

2. Procédé selon la revendication 1, dans lequel le composant de pile à combustible est choisi parmi le groupe constitué d'une plaque à champ d'écoulement de cathode, d'une plaque à champ d'écoulement d'anode, d'un cadre en résine, d'une couche de diffusion de gaz, d'une couche de catalyseur d'anode, d'une couche de catalyseur de cathode, d'un électrolyte à membrane, d'un cadre d'ensemble membrane électrode, et des combinaisons de ceux-ci.

3. Procédé selon la revendication 1, dans lequel le composant de pile à combustible est un ensemble membrane électrode comprenant une couche de diffusion de gaz.

4. Procédé selon la revendication 3, dans lequel l'étape d'application de l'agent d'étanchéité comprend en outre :
l'application d'une pression sur l'agent d'étanchéité de sorte que l'agent d'étanchéité pénètre dans la couche de diffusion de gaz.

5. Procédé selon la revendication 3, dans lequel l'étape d'application de l'agent d'étanchéité comprend en outre :
l'application de l'agent d'étanchéité de sorte qu'un bord de l'ensemble membrane électrode est entièrement recouvert par l'agent d'étanchéité.

6. Procédé selon la revendication 1, dans lequel l'étape de durcissement de la composition comprend :
le durcissement thermique de l'agent d'étanchéité à une température d'environ 130 °C ou moins.

7. Procédé selon la revendication 1, dans lequel l'étape de durcissement de la composition comprend :
la fourniture d'un rayonnement actinique pour durcir l'agent d'étanchéité à environ la température ambiante.

8. Procédé selon la revendication 7, dans lequel le moule est transmissif au rayonnement actinique.

9. Procédé selon la revendication 7, dans lequel la composition d'agent d'étanchéité durcissable comprend un matériau durcissable par rayonnement actinique choisi parmi le groupe constitué du (méth)acrylate, de l'uréthane, du polyéther, de la polyoléfine, du polyester, des copolymères de ceux-ci et de leurs combinaisons.

10. Procédé selon la revendication 7, dans lequel la composition d'agent d'étanchéité durcissable comprend un polyisobutylène à fonction téléchélique, un agent de réticulation silyle
ayant au moins environ deux groupes fonctionnels d'hybride de silicium, un catalyseur de platine et un photoinitiateur.

11. Procédé selon la revendication 1, dans lequel l'oligomère d'hydrocarbure à terminaison alcényle comprend un oligomère de polyisobutylène à terminaison alcényle.

12. Ensemble membrane électrode ayant une composition d'agent d'étanchéité durcie disposée sur des parties périphériques de l'ensemble, dans lequel la composition d'agent d'étanchéité durcie comprend :
un oligomère de polyisobutylène diallyle à terminaison alcényle ;
un monomère alcényle polyfonctionnel choisi parmi le 1,9-décadiène, 1,2,4-trivinylcyclohexane et des combinaisons de ceux-ci ;
un agent de durcissement silyle ayant au moins environ deux groupes fonctionnels d'hybride de silicium ;
un catalyseur d'hydrosilylation ; et
un agent d'initiation ou de réticulation de peroxyde.
